# EUROPEAN PATENT APPLICATION

(11) **EP 4 738 927 A1**
(43) Date of publication of application: **06.05.2026**
(21) Application number: 24830838.9
(22) Date of filing: 27.06.2024
(51) Int. Cl.: H04W 36/08

(54) **ELECTRONIC DEVICE IN NON-TERRESTRIAL NETWORK, AND METHOD**

(30) Priority: 29.06.2023 CN 202310786438
(71) Applicant: Sony Group Corporation, Tokyo 108-0075 (JP)
(72) Inventor: WANG, Xiaoxue, Beijing 100027 (CN); SUN, Chen, Beijing 100027 (CN); ZHOU, Mingtuo, Shanghai 200050 (CN)
(74) Representative: Witte, Weller & Partner Patentanwälte mbB
(86) International application number: PCT/CN2024/101774
(87) International publication number: WO 2025/002203

(57) **Abstract**

The present disclosure relates to an electronic device in a non-terrestrial network, and a method. Described is an electronic device used for a first base station in a non-terrestrial network, and the non-terrestrial network further comprises a user equipment, a second base station, a network function and a satellite, which can communicate with the first base station. The electronic device comprises a processing circuit, which is configured to enable a first base station to execute the following operations: on the basis of a message received from a network function, determining to initiate a first handover of a user equipment to a second base station at a first time; sending a handover request message to the second base station, wherein the handover request message indicates that the handover type of the first handover is a base-station-initiated type; and in response to having received a message indicating that the second base station accepts a handover request, sending a handover command to the user equipment, wherein the handover command instructs the user equipment to execute the first handover, and indicates that the handover type of the first handover is the base-station-initiated type.

## Description

### TECHNICAL FIELD

The present disclosure generally relates to devices and methods in a non-terrestrial network (NTN), and specifically relates to techniques for cell handover in the non-terrestrial network.

### BACKGROUND

Wireless communication systems can utilize various protocols and standards for data transmission between devices. These protocols and standards have undergone extensive development over time, including but not limited to the Third Generation Partnership Project (3GPP), the 3GPP Long Term Evolution (LTE) (e.g., 4G communications), and 3GPP New Radio (NR) (e.g., 5G communications), and even 6G communications. Compared to traditional wireless communication systems, new wireless communication systems (such as 5G NR communication systems, 6G communication systems) significantly enhance speed, latency, capacity, flexibility, and reliability of wireless transmission, thereby providing more possibilities for new usage scenarios.

New wireless communication systems introduce non-terrestrial network communication involving high-altitude platforms such as satellites, serving as a supplement to performance of terrestrial network communications. For example, mobile operators can utilize non-terrestrial networks to provide wireless communication services to areas lacking infrastructure and can continue to offer normal wireless communication services in case of terrestrial network interruptions (such as in battlefield, earthquake or flood, outdoor scenarios).

In a non-terrestrial network, frequent cell handovers might be needed. For example, a low earth orbit (LEO) satellite typically operates at altitudes between 200 kilometers and 2,000 kilometers from the earth. When the LEO satellite is closer to the earth, such as at an altitude of 600 kilometers or 1,200 kilometers, the diameter of the satellite beam's projection on the ground might be relatively small. For example, at an altitude of 600 kilometers and a frequency band of 20GHz, the beam's projection coverage diameter on the ground is about 50 kilometers, with a maximum beam coverage diameter of approximately 1,000 kilometers. Additionally, because the LEO satellite moves at high speeds relative to the ground, the emitted beam's projection also moves rapidly on the ground, with speeds ranging between 6.5 kilometers per second and 8.1 kilometers per second. If a user equipment device is on a high-speed moving airplane, traveling at a speed of 1,000 kilometers per hour, and if the airplane is moving in the same direction as the satellite, the time to cover the user equipment device would be 6.51 seconds or 130 seconds for a beam coverage diameter of 50 kilometers or 1,000 kilometers respectively. If the airplane is moving in the opposite direction to the satellite, the time would be 6 seconds or 120 seconds respectively. This means that the user equipment device needs to perform cell handover every approximately 6 seconds, up to every approximately 130 seconds, at the longest. Therefore, there is a need to find devices and methods that can improve cell handover in the non-terrestrial networks.

### SUMMARY

The present disclosure presents devices and methods in non-terrestrial networks.

According to a first aspect of the present disclosure, an electronic device for a first base station in a non-terrestrial network is provided. The non-terrestrial network further includes a user equipment device capable of communicating with the first base station, a second base station, a network function, and a satellite. The electronic device includes a processing circuit configured to cause the first base station to perform following operations: determining, based on a message received from the network function, that a first handover of the user equipment device to the second base station is to be initiated at a first time; transmitting a handover request message to the second base station, wherein the handover request message indicates that a handover type of the first handover is the base station-initiated type; and transmitting a handover command to the user equipment device, in response to receiving a message indicating that the second base station has accepted the handover request, wherein the handover command instructs the user equipment device to perform the first handover and indicates that the handover type of the first handover is a base station-initiated type.

Correspondingly, according to the first aspect of the present disclosure, a method for a first base station in a non-terrestrial network is provided. The non-terrestrial network further includes a user equipment device capable of communicating with the first base station, a second base station, a network function, and a satellite. The method includes: determining, based on a message received from the network function, that a first handover of the user equipment device to the second base station is to be initiated at a first time; transmitting a handover request message to the second base station, wherein the handover request message indicates that a handover type of the first handover is a base station-initiated type; and transmitting a handover command to the user equipment device, in response to receiving a message indicating that the second base station has accepted the handover request, wherein the handover command instructs the user equipment device to perform the first handover and indicates that the handover type of the first handover is a base station-initiated type.

According to a second aspect of the present disclosure, an electronic device for a user equipment device in a non-terrestrial network is provided. The non-terrestrial network further includes a first base station capable of communicating with the user equipment device, a second base station capable of communicating with the first base station, a network function, and a satellite. The electronic device includes a processing circuit configured to cause the user equipment device to perform following operations: receiving a handover command from the first base station, wherein the handover command instructs the user equipment device to perform a first handover to the second base station and indicates that a handover type of the first handover is a base station-initiated type; performing signal quality measurements with the first base station and signal quality measurements with the second base station within a predetermined time period; and performing the first handover in response to determining that, within the predetermined time period, a signal quality between the user equipment device and the first base station and a signal quality between the user equipment device and the second base station meet a predefined condition.

Correspondingly, according to the second aspect of the present disclosure, a method for a user equipment device in a non-terrestrial network is also provided. The non-terrestrial network further includes a first base station capable of communicating with the user equipment device, a second base station capable of communicating with the first base station, a network function, and a satellite. The method includes: receiving a handover command from the first base station, wherein the handover command instructs the user equipment device to perform a first handover to the second base station and indicates that a handover type of the first handover is a base station-initiated type; performing signal quality measurements with the first base station and signal quality measurements with the second base station within a predetermined time period; and performing the first handover in response to determining that, within the predetermined time period, a signal quality between the user equipment device and the first base station and a signal quality between the user equipment device and the second base station meet a predefined condition.

According to a third aspect of the present disclosure, an electronic device for a network function in a non-terrestrial network is provided. The non-terrestrial network further includes a user equipment device capable of communicating with the network function, a first base station, a second base station, and a satellite. The electronic device includes a processing circuit configured to cause the network function to perform following operations: transmitting a message to the first base station, wherein the message comprises an indication to initiate, at a first time, a first handover of the user equipment device to the second base station, wherein the first base station transmits a handover request message to the second base station, wherein the handover request message indicates that a handover type of the first handover is a base station-initiated type, and wherein, in response to receiving a message indicating that the second base station has accepted the handover request, the first base station transmits a handover command to the user equipment device, wherein the handover command instructs the user equipment device to perform the first handover and indicates that the handover type of the first handover is a base station-initiated type.

Correspondingly, according to the third aspect of the present disclosure, a method for a network function in a non-terrestrial network is also provided. The non-terrestrial network further includes a user equipment device capable of communicating with the network function, a first base station, a second base station, and a satellite. The method includes: transmitting a message to the first base station, wherein the message comprises an indication to initiate, at a first time, a first handover of the user equipment device to the second base station, wherein the first base station transmits a handover request message to the second base station, wherein the handover request message indicates that a handover type of the first handover is a base station-initiated type, and wherein, in response to receiving a message indicating that the second base station has accepted the handover request, the first base station transmits a handover command to the user equipment device, wherein the handover command instructs the user equipment device to perform the first handover and indicates that the handover type of the first handover is a base station-initiated type.

According to a fourth aspect of the present disclosure, an electronic device for a second base station in a non-terrestrial network is provided. The non-terrestrial network further includes a user equipment device capable of communicating with the second base station, a first base station, a network function, and a satellite. The electronic device includes a processing circuit configured to cause the second base station to perform following operations: receiving from the first base station a handover request message for a first handover of the user equipment device to the second base station, wherein the handover request message indicates that a handover type of the first handover is a base station-initiated type and the first handover is determined, to be initiated at a first time, by the first base station based on a message received from the network function; and in response to determining that resources meet requirements for the first handover, transmitting to the first base station a message indicating that the second base station has accepted the handover request.

Correspondingly, according to the fourth aspect of the present disclosure, a method for a second base station in a non-terrestrial network is also provided. The non-terrestrial network further includes a user equipment device capable of communicating with the second base station, a first base station, a network function, and a satellite. The method includes: receiving from the first base station a handover request message for a first handover of the user equipment device to the second base station, wherein the handover request message indicates that a handover type of the first handover is a base station-initiated type and the first handover is to be initiated at a first time determined by the first base station based on a message received from the network function; and in response to determining that resources meet requirements for the first handover, transmitting to the first base station a message indicating that the second base station has accepted the handover request.

According to a fifth aspect of the present disclosure, a computer-readable storage medium having stored thereon one or more instructions is provided. When executed by one or more processors of an electronic device, the one or more instructions cause the electronic device to perform a method according to various embodiments of the present disclosure.

According to a sixth aspect of the present disclosure, a computer program product including program instructions is provided. When executed by one or more processors of a computer, the program instructions cause the computer to perform a method according to various embodiments of the present disclosure.

The above summary is provided to summarize some exemplary embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure, where:
FIG. 1 illustrates an exemplary scenario diagram of a cell handover in a non-terrestrial network according to some embodiments of the present disclosure.
FIG. 2 illustrates an exemplary scenario diagram of a cell handover in a non-terrestrial network according to some embodiments of the present disclosure.
FIG. 3 illustrates an exemplary electronic device for a first base station according to some embodiments of the present disclosure.
FIG. 4 illustrates a flowchart of an exemplary handover method for a first base station in a non-terrestrial network according to some embodiments of the present disclosure.
FIG. 5 illustrates an exemplary electronic device for a base station according to some embodiments of the present disclosure.
FIG. 6 illustrates a flowchart of an exemplary registration method for a base station in a non-terrestrial network according to some embodiments of the present disclosure.
FIG. 7 illustrates an exemplary electronic device for a user equipment device according to some embodiments of the present disclosure.
FIG. 8 illustrates a flowchart of an exemplary handover method for a user equipment device in a non-terrestrial network according to some embodiments of the present disclosure.
FIG. 9 illustrates an exemplary electronic device for a user equipment device according to some embodiments of the present disclosure.
FIG. 10 illustrates a flowchart of an exemplary registration method for a user equipment device in a non-terrestrial network according to some embodiments of the present disclosure.
FIG. 11 illustrates an exemplary electronic device for a network function according to some embodiments of the present disclosure.
FIG. 12 illustrates a flowchart of an exemplary registration method for a network function in a non-terrestrial network according to some embodiments of the present disclosure.
FIG. 13 illustrates an exemplary electronic device for a second base station according to some embodiments of the present disclosure.
FIG. 14 illustrates a flowchart of an exemplary handover method for a second base station in a non-terrestrial network according to some embodiments of the present disclosure.
FIG. 15 illustrates an information exchange diagram for a cell handover procedure in a non-terrestrial network according to some embodiments of the present disclosure.
FIG. 16 illustrates an information exchange diagram for a cell handover procedure in a non-terrestrial network according to some embodiments of the present disclosure.
FIG. 17 illustrates an information exchange diagram for a handover data collection procedure in a non-terrestrial network according to some embodiments of the present disclosure.
FIG. 18 illustrates an information exchange diagram for a handover model parameter acquisition procedure in a non-terrestrial network according to some embodiments of the present disclosure.
FIG. 19 illustrates an information exchange diagram for a handover model parameter testing procedure in a non-terrestrial network according to some embodiments of the present disclosure.
FIG. 20 illustrates an information exchange diagram for a cell handover procedure in a non-terrestrial network according to some embodiments of the present disclosure.
FIG. 21 illustrates an information exchange diagram for a user equipment device registration procedure in a non-terrestrial network according to some embodiments of the present disclosure.
FIG. 22 illustrates a schematic diagram of a cell handover procedure in a non-terrestrial network according to some embodiments of the present disclosure.
FIG. 23 is a block diagram of an example structure of a personal computer as an information processing device that can be used in an embodiment of the present disclosure.
FIG. 24 is a block diagram illustrating a first example of a schematic configuration of a base station to implement the technology of the present disclosure.
FIG. 25 is a block diagram illustrating a second example of a schematic configuration of a base station to implement the technology of the present disclosure.
FIG. 26 is a block diagram illustrating an example of a schematic configuration of a smartphone to implement the technology of the present disclosure.
FIG. 27 is a block diagram illustrating an example of a schematic configuration of a car navigation device to implement the technology of the present disclosure.

Although the embodiments described in the present disclosure can have various modifications and alternatives, specific embodiments thereof are illustrated as examples in the accompany drawings and described in detail in this specification. It should be understood that the drawings and detailed description thereof are not intended to limit embodiments to the specific forms disclosed, but to cover all modifications, equivalents, and alternatives falling within the spirit and scope of the claims.

### DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system includes at least network devices and user equipment devices, and a network device can provide communication services to one or more user equipment devices.

In the present disclosure, the term "network device" (or "base station") encompasses its full breadth of conventional meaning and includes, at least, a wireless communication station forming a part of a wireless communication system or a radio system for facilitating communication. By way of example, the network device may be an eNB for 4G communication standards, a gNB for 5G communication standards, a remote radio head, a wireless access point, a drone control tower, or a communication device performing similar functions. Throughout the present disclosure, the term "network device" and "base station" may be used interchangeably, or a "network device" may be implemented as a part of a "base station". Application examples will be described in detail below with reference to the accompanying drawings, using the network device as an example.

In the present disclosure, the term "user equipment device (UE)" or "terminal device" encompasses its full conventional meaning and includes, at least, terminal devices forming a part of a wireless communication system or a radio system for facilitating communication. By way of example, the user equipment device may be terminal devices such as mobile phones, laptops, tablets, in-vehicle communication devices, wearable devices, sensors, and the like, or components thereof. Throughout the present disclosure, the term "user equipment device" (hereinafter referred to as "UE" for short) and "terminal device" may be used interchangeably, or a "user equipment device" may be implemented as a part of a "terminal device".

Throughout the present disclosure, the term "network device side"/"base station side" encompasses the full breadth of its conventional meaning, typically indicating the side transmitting data in the downlink of a communication system, or indicating the side receiving data in the uplink of a communication system. Similarly, the terms "user equipment device side"/"terminal device side" encompass the full breadth of their conventional meanings and may correspondingly denote the side receiving data in the downlink of a communication system, or the side transmitting data in the uplink of a communication system.

It should be noted that although the following description of embodiments of the present disclosure is primarily based on communication systems including a network device and a user equipment device, these descriptions may be extended accordingly to encompass communication systems comprising any other type of the network device side and the user equipment device side. For example, operations on the network device side may correspond to operations of a base station, and operations on the user equipment device side may correspond to operations of a terminal device.

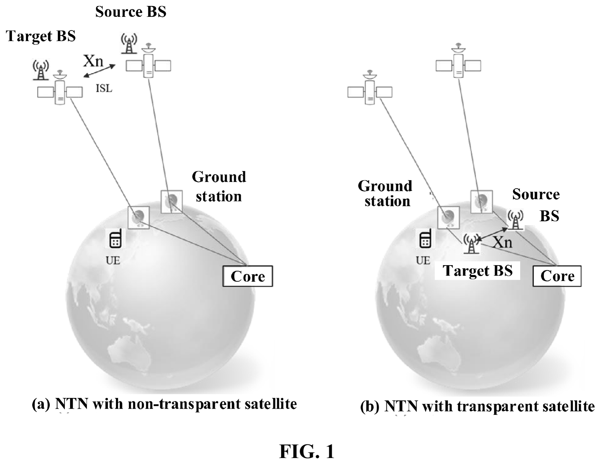

FIG. 1 illustrates an exemplary scenario diagram of a cell handover in a non-terrestrial network according to some embodiments of the present disclosure. In the scenario depicted in FIG. 1, there is an Xn interface between a source base station and a target base station, and a cell handover is an Xn interface-based handover (e.g., a handover within a same AMF). It should be understood that FIG. 1 merely illustrates an exemplary non-terrestrial network, the specific implementation of which may encompass additional types and possible arrangements. For example, an actual non-terrestrial network may include more or fewer types of devices, or a greater or lesser number of devices. Features of the present disclosure may be implemented in any one of various systems as required.

According to embodiments of the present disclosure, the non-terrestrial network may include base stations (such as gNBs), user equipment devices (UEs), satellites (such as geostationary orbit (GEO), medium Earth orbit (MEO), or low Earth orbit (LEO) satellites), and network functions in the core network (such as the Access and Mobility Function (AMF)).

Scenarios for the Xn interface-based cell handover may be categorized into the non-transparent satellite scenario and the transparent satellite scenario. As illustrated in FIG. 1, in the non-terrestrial network with non-transparent satellites, both the source base station and the target base station are satellite base stations. That is, both are situated on satellites and can communicate with the UE from the satellite. Between the source satellite base station and the target satellite base station, Xn protocol information is transmitted via an inter-satellite link (ISL). The transmission distance between the UE and the satellite base station is the satellite altitude H, while the communication distance between the base station and the core network is the satellite altitude H plus the distance from the ground station to the core network. As illustrated in FIG. 1, in the non-terrestrial network with transparent satellites, both the source base station and the target base station are terrestrial base stations, i.e., both are located on the ground. The satellite can forward signals from the base station to the UE or forward signals from the UE to the base station. Xn protocol information is transmitted between terrestrial base stations via fibre optic or similar connections. The transmission distance between the UE and the base station is approximately twice the satellite altitude H, i.e. 2H, while the distance from the base station to the core network is the terrestrial distance, potentially ranging from tens to hundreds of kilometres. It follows that, regardless of the scenario, the energy consumption for the UE to transmit messages to the base station is greater than in terrestrial networks, and the latency is longer (particularly in scenarios with transparent satellites).

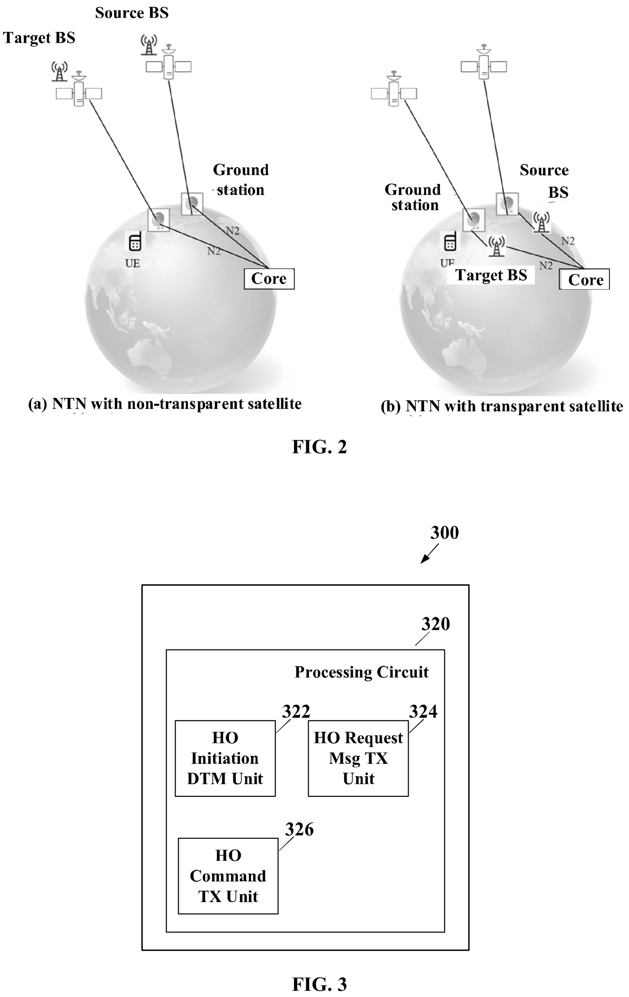

FIG. 2 illustrates an exemplary scenario diagram of a cell handover in a non-terrestrial network according to some embodiments of the present disclosure. In the scenario depicted in FIG. 2, the cell handover is based on an N2 interface, which may be due to the absence of an Xn interface between the source base station and the target base station or due to the source base station and the target base station being connected to different AMFs. It should be understood that FIG. 2 merely illustrates an exemplary non-terrestrial network, the specific implementation of which may encompass additional types and possible arrangements. For example, an actual non-terrestrial network may include more or fewer types of devices, or a greater or lesser number of devices. Features of the present disclosure may be implemented in any one of various systems as required.

When the non-terrestrial network does not employ the Xn interface, base stations cannot communicate handover information directly, and handover information exchange may occur via the N2 interface between the base stations and the core network instead. Scenarios for the N2 interface-based cell handover may also be categorized into the non-transparent satellite scenario and the transparent satellite scenario. As illustrated in FIG. 2, in the non-terrestrial network with non-transparent satellites, to transmit handover information between base stations via the N2 interface, it requires for the information to be transmitted from a base station to a ground station, then to the core network, before being transmitted from the core network back to the ground station and finally to another base station. That is, two transmissions between the ground and the satellite are required, resulting in extended latency. As illustrated in FIG. 2, in the non-terrestrial network with transparent satellites, for an interaction between the UE and the base station, two transmissions between the ground and the satellite are also required, resulting in similarly extended latency.

A traditional cell handover is typically UE-initiated. That is, the UE measures the signal quality between the UE and the source cell and the signal quality between the UE and the target cell, and upon meeting predetermined conditions, sends a measurement report to the source base station. Upon receiving the report from the UE, the source base station determines whether to perform the handover. If it is determined to perform the handover, the handover procedure begins. As described above, low-orbit satellite beams provide extremely brief coverage windows for UEs. For example, for a satellite at an altitude of 600 kilometres, the beam coverage lasts between 6 and 130 seconds. Thus, employing the traditional handover mechanism would necessitate frequent measurement message transmission from the UE to the base station, significantly increasing power consumption of the UE. This is particularly problematic for battery-powered UEs in IoT applications, where minimizing such power consumption is desired.

Some UEs in the non-terrestrial network (e.g., IoT terminal devices) may be location-fixed. For location-fixed UEs, the periodic rotation of satellites around the Earth typically results in some periodicity in handover timing, as well as the source and target base stations involved, for each handover. That is, at some specific fixed times (or time intervals), a location-fixed UE may consistently handover from a same source base station to a same target base station. Therefore, the present disclosure provides a method for a handover initiated by a base station in the non-terrestrial network. Network functions may analyze handover patterns of location-fixed UEs and communicate the patterns to base stations. Subsequently, at some predetermined time (or time interval), a base station may initiate a handover. This can reduce the number of measurements required to be performed by the UE during the handover and minimize signaling overhead, thereby achieving power conservation. It should be understood that the solutions of the present disclosure are not limited to be applicable to location-fixed UEs but may be applicable to any other UE exhibiting a pattern of cell handovers, such as a UE whose location moves only within a finite range (e.g., several meters or tens of meters).

FIG. 3 illustrates an exemplary electronic device 300 for a first base station according to some embodiments of the present disclosure. The electronic device 300 may correspond to the source base stations in FIGS. 1 and 2, or the electronic device 300 may be used to control operations of the source base stations in FIGS. 1 and 2. As shown in FIG. 3, the electronic device 300 may include a processing circuit 320.

According to embodiments of the present disclosure, the processing circuit 320 may be configured to: determine, based on a message received from a network function (e.g., AMF) in a core network, to initiate a first handover of a user equipment device from a first base station (e.g., a source base station in FIGS. 1 and 2) to a second base station (e.g., a target base station in FIGS. 1 and 2) at a first time; transmit a handover request message to the second base station, where the handover request message indicates that a handover type of the first handover is a base station-initiated type; and in response to receiving a message indicating that the second base station has accepted the handover request, transmit a handover command to the user equipment device, where the handover command instructs the user equipment device to perform the first handover and indicates that the handover type of the first handover is the base station-initiated type.

In the exemplary structure of the device described above, the processing circuit 320 may be in the form of a general-purpose processor or a dedicated processing circuit, such as an ASIC. For example, the processing circuit 320 may be constructed from circuitry (hardware) or a central processing device (such as, a central processing unit (CPU)). Furthermore, the processing circuit 320 may carry programs (software) for the circuitry (hardware) or the central processing device to operate. The programs may be stored in memory (such as being arranged in the memory) or an externally connected storage medium, and may be downloaded via a network (such as the internet).

According to embodiments of the present disclosure, the processing circuit 320 may include various units for implementing the aforementioned functions, such as a handover initiation determination (HO Initiation DTM) unit 322 configured to determine the initiation of the first handover from the first base station to the second base station at the first time, a handover request message transmission (HO Request Msg TX) unit 324 configured to transmit the handover request message to the second base station, and a handover command transmission (HO Command TX) unit 326 configured to transmit the handover command to the user equipment device in response to receiving the message indicating that the second base station has accepted the handover request.

The units included in the processing circuit 320 may be communicatively coupled to one another (not shown). It should be noted that although respective units are depicted as discrete units in FIG. 3, one or more of these units may also be combined into a single unit or split into multiple units. It should be noted that the aforementioned units represent logical modules defined by their specific functions rather than to limit their implementation. For example, they can be realized in software, hardware, or a combination thereof. In practice, these units may be implemented as separate physical entities or by a single entity (e.g., a processor (CPU or DSP, etc.), an integrated circuit, etc.).

The processing circuit 320 may be implemented as including one or more other components of an electronic device at the base station side or may be implemented as the electronic device at the base station side. In practice, the processing circuit 320 may be implemented as a chip (such as an integrated circuit module including a single wafer), a hardware component, or a complete product.

It should be understood that FIG. 3 merely illustrates a schematic structural configuration of the electronic device at the base station side, the electronic device 300 may additionally include other possible components (e.g., memory, etc.). Optionally, the electronic device 300 may further include other components not shown, such as memory, radio frequency links, baseband processing units, network interfaces, controllers, etc. The processing circuit may be associated with memory and/or antennas. For example, the processing circuit may connect directly or indirectly (e.g., with other components interposed) to the memory for data access. Furthermore, the processing circuit may connect directly or indirectly to the antenna to transmit radio signals via a communication unit and to receive radio signals via a communication unit.

The memory may store various information generated by the processing circuit 320, programs and data for operating the electronic device at the base station side, data to be transmitted by the electronic device at the base station side, and so forth. The memory may also be located in the electronic device at the base station side but external to the processing circuit, or even external to the electronic device at the base station side. The memory may include volatile memory and/or non-volatile memory. For example, the memory may include, but not limited to, random access memory (RAM), dynamic random access memory (DRAM), static random access memory (SRAM), read-only memory (ROM), and flash memory.

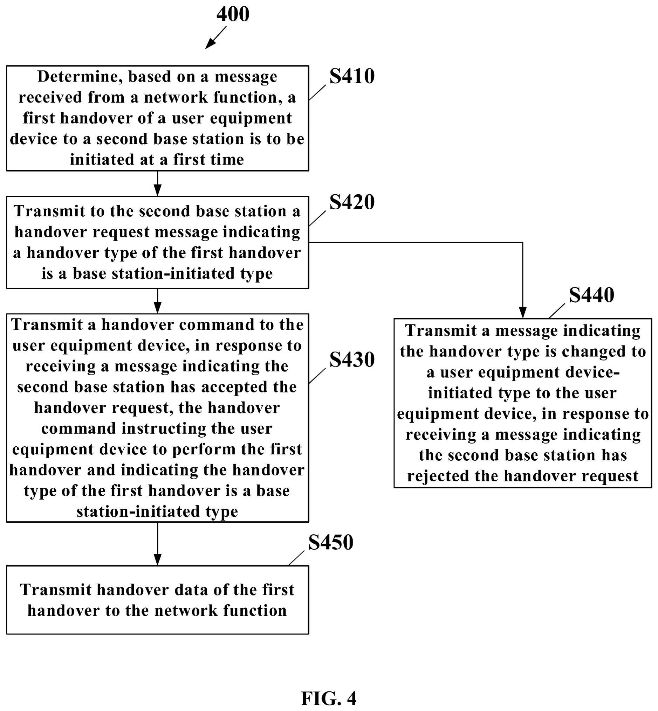

Functions of various units in the processing circuit 320 of the electronic device 300 for the first base station of FIG. 3 will be described below with reference to FIG. 4. FIG. 4 illustrates a flowchart of an exemplary handover method 400 for a first base station in a non-terrestrial network, according to some embodiments of the present disclosure.

At step S410, based on a message received from a network function, it is determined that a first handover of a user equipment device to a second base station is to be initiated at a first time. Step S410 may, for example, be performed by the handover initiation determination unit 322 shown in FIG. 3. According to some embodiments, the message received from the network function may include handover model parameters obtained by a network function based on handover data of a plurality of handovers of the user equipment device-initiated type (i.e., traditional cell handovers) occur prior to the first handover. The handover model parameters include at least an identifier of the user equipment device, a set of handover times including the first time, an identifier of the first base station, and an identifier of the second base station.

According to some embodiments, the user equipment device may be of the location-fixed type. Prior to step S410, the method 400 may further include receiving from the network function a message instructing the first base station to collect handover data for a set of location-fixed type user equipment devices, performing a first plurality of handovers of the user equipment device-initiated type with user equipment devices in the set of location-fixed type user equipment devices, and transmitting handover data of the first plurality of handovers to the network function, where the first plurality of handovers occur prior to the first handover. The handover model parameters may be obtained by the network function based on the handover data of the first plurality of handovers. According to some embodiments, the handover model parameters may be obtained by the network function through the following operations: training a machine learning model (e.g., logistic regression, artificial neural networks, etc.) using the handover data of the first plurality of handovers as training data; and generating the handover model parameters by inputting the identifier of the user equipment device into the trained machine learning model. It should be understood that the present disclosure is not limited thereto, and the network function may also obtain the handover model parameters based on any other suitable algorithm (e.g., calculating averages, etc.). According to some embodiments, the handover data of each handover of the first plurality of handovers may include one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions (e.g., rainy, cloudy, sunny, etc.), and so forth. It should be understood that handover data may be transmitted after each handover completes or may be transmitted in batches to conserve signaling overhead. Furthermore, the network function may obtain a portion of the handover data, such as weather conditions, from other data sources.

According to some embodiments, the set of handover times may include one or more handover times (or time periods) for the user equipment device. For example, the set of handover times may be {08:15:20 to 8:15:50, 16:10, and 23:55}, indicating that the network function, based on analysis results, recommends the user equipment device perform three handovers per day. The first handover may occur between 08:15:20 and 08:15:50, the second at 16:10, and the third at 23:55. It should be understood that this is merely an example; the user equipment device may perform any number of handovers throughout the day, the time of the first handover may also be a single point in time, while the second and third handovers may be scheduled within time periods, and so forth. When the handover time is a time period (e.g., 08:15:20 to 08:15:50), the first base station may select any appropriate point in the period to initiate the handover based on any suitable strategy. For example, it may select the earliest point in the period, a point exactly at the midpoint in the period, and so forth.

According to some embodiments, prior to step S410, the handover method 400 may further include, after receiving the handover model parameters from the network function, performing a second plurality of handovers of the user equipment device-initiated type with user equipment devices; transmitting handover data of the second plurality of handovers to the network function, where the second plurality of handovers occur before the first handover. According to some embodiments, the handover data of each handover of the second plurality of handovers may include one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, weather conditions, and so forth. It should be understood that handover data may be transmitted after each handover completes or may be transmitted in batches to conserve signaling overhead. Furthermore, the network function may obtain a portion of the handover data, such as weather conditions, from other data sources.

The network function may test accuracy of the handover model by comparing the handover data of the second plurality of handovers with the handover model parameters. In response to determining that the proportion of handovers of the second plurality of handovers, for which the handover data matches the handover model parameters, exceeds a threshold (e.g., 70%, 80%, etc.), the first base station may receive a message from the network function indicating that a base station-initiated handover may begin. According to some embodiments, the determination in step S410 to initiate the first handover of the user equipment device to the second base station at the first time may be performed at least in response to receiving the message indicating that a base station-initiated handover can begin.

The flow then proceeds to step S420. At step S420, a handover request message is transmitted to the second base station, where the handover request message indicates that a handover type of the first handover is a base station-initiated type. Step S420 may, for example, be performed by the handover request message transmission unit 324 shown in FIG. 3. For example, the handover request message may include one or more bits indicating that the handover type of the first handover is the base station-initiated type. The handover request message may also include relevant information such as a number of sessions. According to some embodiments, for example, for the Xn interface-based handover scenario illustrated in FIG. 1, transmitting the handover request message to the second base station includes transmitting the handover request message directly to the second base station. According to some embodiments, for example, for the N2 interface-based handover scenario illustrated in FIG. 2, transmitting the handover request message to the second base station includes transmitting a handover requirement to the network function, where the type of the handover requirement is configured as base station initiated. Subsequently, the network function transmits the handover request message to the second base station in response to receiving the handover requirement.

Subsequently, in response to receiving the message indicating that the second base station has accepted the handover request, the flow proceeds to step S430. At step S430, a handover command (e.g., an RRCConfiguration message) may be transmitted to the user equipment device, where the handover command instructs the user equipment device to perform the first handover and indicates that the handover type of the first handover is the base station-initiated type. For example, the handover command may include one or more bits indicating that the handover type of the first handover is the base station-initiated type. Step S430 may, for example, be performed by the handover command transmission unit 326 shown in FIG. 3. According to some embodiments, for example, for the Xn interface-based handover scenario illustrated in FIG. 1, the message indicating that the second base station has accepted the handover request may be an acknowledgement message for the handover request received from the second base station. According to some embodiments, for example, for the N2 interface-based handover scenario illustrated in FIG. 2, the message indicating that the second base station has accepted the handover request may be a handover command received from the network function. That is, the network function may receive an acknowledgement message for the handover request from the second base station and then transmit the handover command to the first base station.

In response to receiving a message indicating that the second base station has rejected the handover request, the flow proceeds to step S440. At step S440, a message indicating that the handover type is changed to a user equipment device-initiated type may be transmitted to the user equipment device. In some embodiments, the second base station may examine its own resources and, upon determining it cannot meet requirements of the handover of the user equipment device, transmit a message rejecting the handover request. In that case, the user equipment device may be informed that the handover falls back to the traditional one, where the user equipment device first performs signal quality measurements and then reports to the base station. Step S440 may, for example, be performed by the handover command transmission unit 326 shown in FIG. 3, or it may be performed by other units not shown in FIG. 3.

Following step S430, the flow may proceed to step S450. At step S450, upon completion of the first handover, the handover data of the first handover may be transmitted to the network function. It should be understood that between Step S430 and Step S450, the first base station may additionally perform one or more steps related to the handover (e.g., transmitting an SN Status Transfer message to the second base station). In some embodiments, the network function may refine handover model parameters based on the handover data of the first handover, thereby enhancing the accuracy of the handover model. According to some embodiments, the handover data of the first handover may include one or more of: an identifier of the user equipment device associated with the first handover, a time to initiate the handover determined by the source base station associated with the handover(i.e., the first time), an identifier of the source base station, an identifier of the target base station, an identifier of a satellite associated with the source base station, an identifier of a satellite associated with the target base station, weather conditions, and so forth.

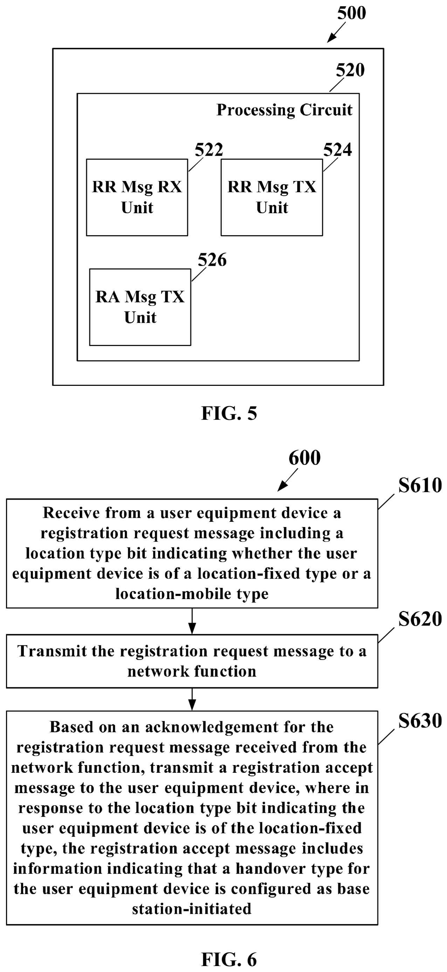

Although the cell handover techniques described herein are not limited to user equipment devices at fixed locations and may be applied to any other user equipment device exhibiting regular handover patterns, the core network may wish to know whether a user equipment device is stationary, enabling adoption of distinct mechanisms for cell handovers of user equipment devices of the location-fixed type and the location-motile type (e.g., transmitting different signaling messages). Consequently, in some embodiments, location-fixed user equipment devices in a non-terrestrial network may register its location type information during the core network registration procedure. A registration method and device for a non-terrestrial networks according to some embodiments of the present disclosure are described below with reference to FIGS. 5-6, FIG. 9, and FIG. 10.

FIG. 5 illustrates an exemplary electronic device 500 for a base station according to some embodiments of the present disclosure. The electronic device 500 may correspond to any base station in FIGS. 1 and 2 (e.g., the source base station or the target base station), or the electronic device 500 may be used to control operations of any base station in FIGS. 1 and 2 (e.g., the source base station or the target base station). As illustrated in FIG. 5, electronic device 500 may include a processing circuit 520.

According to embodiments of the present disclosure, the processing circuit 520 may be configured to: receive a registration request message from a user equipment device, where the registration request message includes a location type bit indicating whether the user equipment device is of a location-fixed type or a location-mobile type; transmit the registration request message to a network function; and based on an acknowledgement for the registration request message received from the network function, transmit a registration accept message to the user equipment device. In response to the location type bit indicating that the user equipment device is of the location-fixed type, the registration accept message includes information indicating that the handover type for the user equipment device is configured as base station-initiated.

In the exemplary structure of the device described above, the processing circuit 520 may be in the form of a general-purpose processor or a dedicated processing circuit, such as an ASIC. For example, the processing circuit 520 may be constructed from circuitry (hardware) or a central processing device (such as, a central processing unit (CPU)). Furthermore, the processing circuit 520 may carry programs (software) for the circuitry (hardware) or the central processing device to operate. The programs may be stored in memory (such as being arranged in the memory) or an externally connected storage medium, and may be downloaded via a network (such as the internet).

According to embodiments of the present disclosure, the processing circuit 520 may include various units for implementing the aforementioned functions, such as a registration request message receiving (RR Msg RX) unit 522 configured to receive the registration request message from the user equipment device, a registration request message transmission (RR Msg TX) unit 524 configured to transmit the registration request message to the network function, and a registration accept message transmission (RA Msg TX) unit 526 configured to transmit the registration accept messages to the user equipment device based on the acknowledgement for the registration request message received from the network function.

The units included in the processing circuit 520 may be communicatively coupled to one another (not shown). It should be noted that although respective units are depicted as discrete units in FIG. 5, one or more of these units may also be combined into a single unit or split into multiple units. It should be noted that the aforementioned units represent logical modules defined by their specific functions rather than to limit their implementation. For example, they can be realized in software, hardware, or a combination thereof. In practice, these units may be implemented as separate physical entities or by a single entity (e.g., a processor (CPU or DSP, etc.), an integrated circuit, etc.).

The processing circuit 520 may be implemented as including one or more other components of an electronic device at the base station side or may be implemented as the electronic device at the base station side. In practice, the processing circuit 520 may be implemented as a chip (such as an integrated circuit module including a single wafer), a hardware component, or a complete product.

It should be understood that FIG. 5 merely illustrates a schematic structural configuration of the electronic device at the base station side. Similar to electronic device 300, the electronic device 500 may also include other possible components (e.g., memory, etc.), which is not elaborated upon further herein.

Functions of various units in the processing circuit 520 of the electronic device 500 for the base station of FIG. 5 will be described below with reference to FIG. 6. FIG. 6 illustrates a flowchart of an exemplary registration method 600 for a base station in a non-terrestrial network according to some embodiments of the present disclosure.

At step S610, a registration request message is received from a user equipment device, where the registration request message includes a location type bit indicating whether the user equipment device is of a location-fixed type or a location-mobile type. The registration request message may, for example, be the registration request message described in 3GPP TS 23.502 V17.6.0 (2022-09). Step S610 may, for example, be performed by the registration request message receiving unit 522 in FIG. 5. The location type bit may include one or more bits. According to some embodiments, the location type bit includes a single bit, and, for example, "0" may denote a location-fixed type user equipment device and "1" may denote a location-mobile type user equipment device. Any other suitable means may also be employed to indicate the location type of the user equipment device. Furthermore, for the location-fixed type user equipment device, the registration request message may additionally include a field of N1 bytes in length to indicate geographical location information of that user equipment device, such as Global Positioning System (GPS) coordinates.

The flow then proceeds to step S620. At step S620, the registration request message from the user equipment device is transmitted to a network function (e.g., AMF). Step S620 may be performed, for example, by the registration request message transmission unit 524 in FIG. 5. Prior to transmitting the registration request message to the network function, step S620 may also include performing a network function selection. The network function may register the user equipment device based on the location type bit in the registration request message. For example, in the above example, when the location type bit is "0", the user equipment device is registered as the location-fixed type; when the location type bit is "1", it is registered as the location-mobile type. For the location-fixed type user equipment device, its geographical location information may also be registered. Upon completion of registration, the network function may transmit an acknowledgement for the registration request message to the base station.

The flow then proceeds to step S630. At step S630, based on the acknowledgement for the registration request message received from the network function, a registration accept message is transmitted to the user equipment device. The registration accept message may, for example, be the registration accept message described in 3GPP TS 23.502 V17.6.0 (2022-09). Step S630 may, for example, be performed by the registration accept message transmission unit 526 in FIG. 5. According to some embodiments, in response to the location type bit indicating that the user equipment device is of the location fixed type, the registration accept message may include information indicating that the handover type for the user equipment device is configured as base station initiated, which information may include one or more bits.

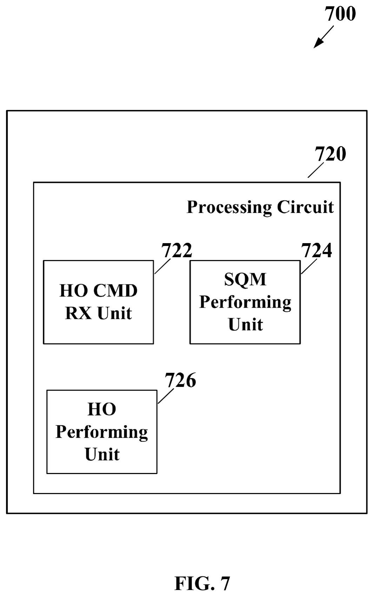

Methods and devices for the base station side in a non-terrestrial network according to some embodiments of the present disclosure have been described above with reference to FIGS. 3 to 6. Methods and devices for the user equipment device side in a non-terrestrial network according to some embodiments of the present disclosure will now be described with reference to FIGS. 7 to 10.

FIG. 7 illustrates an exemplary electronic device 700 for a user equipment device according to some embodiments of the present disclosure. The electronic device 700 may correspond to any UE in FIGS. 1 and 2, or the electronic device 700 may be used to control operations of any UE in FIGS. 1 and 2. The UE is currently communicating with a first base station (i.e., the source base station for the handover). As shown in FIG. 7, the electronic device 700 may include a processing circuit 720.

According to embodiments of the present disclosure, the processing circuit 720 may be configured to: receive a handover command from a first base station, where the handover command instructs the user equipment device to perform a first handover to a second base station and indicates that a handover type of the first handover is a base station-initiated type; perform signal quality measurements with the first base station and with the second base station within a predetermined time period; and perform the first handover in response to determining that, within the predetermined time period, a signal quality between the user equipment device and the first base station and a signal quality between the user equipment device and the second base station meet predefined condition(s).

In the exemplary structure of the device described above, similar to processing circuits 320 and 520, the processing circuit 720 may be in the form of a general-purpose processor or a dedicated processing circuit. Furthermore, the processing circuit 720 may carry programs (software) for the circuitry (hardware) or the central processing device to operate.

According to embodiments of the present disclosure, the processing circuit 720 may include various units for implementing the aforementioned functions, such as a handover command receiving (HO CMD RX) unit 722 configured to receive the handover command from the first base station, a signal quality measurement (SQM) performing unit 724 configured to perform signal quality measurements with the first base station and with the second base station within a predetermined time period, and a handover (HO) performing unit 726 configured to perform the first handover in response to determining that the signal quality between the user equipment device and the first base station and the signal quality between the user equipment device and the second base station meet predefined condition(s) within the predetermined time period.

The units included in the processing circuit 720 may be communicatively coupled to one another (not shown). It should be noted that although respective units are depicted as discrete units in FIG. 7, one or more of these units may also be combined into a single unit or split into multiple units. It should be noted that the aforementioned units represent logical modules defined by their specific functions rather than to limit their implementation. For example, they can be realized in software, hardware, or a combination thereof. The processing circuit 720 may be implemented as including one or more other components in an electronic device at the user equipment device side, or it may be implemented as the electronic device at the user equipment device side. In practical implementation, the processing circuit 720 may be implemented as a chip (such as an integrated circuit module including a single wafer), a hardware component, or a complete product.

It should be understood that FIG. 7 merely illustrates a schematic structural configuration of an electronic device at the base station side. Similar to electronic devices 300 and 500, the electronic device 700 may also include other possible components (e.g., memory, etc.), which is not elaborated upon further herein.

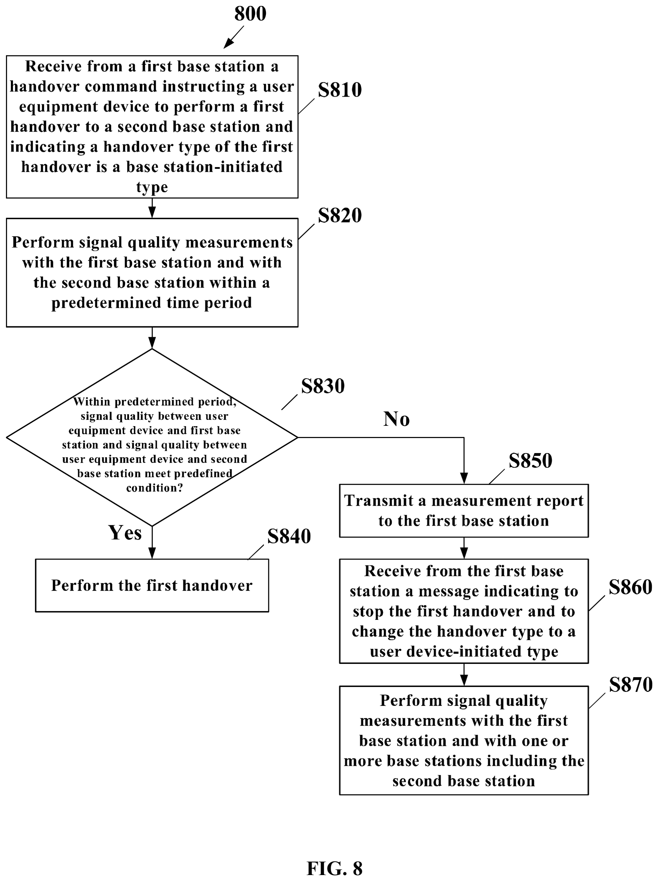

Functions of various units in the processing circuit 720 of the electronic device 700 for the user equipment device of FIG. 7 will be described below with reference to FIG. 8. FIG. 8 illustrates a flowchart of an exemplary handover method 800 for a user equipment device in a non-terrestrial network according to some embodiments of the present disclosure.

At Step S810, a handover command (e.g., an RRCReconfiguration message) is received from a first base station, where the handover command instructs the user equipment device to perform a first handover to a second base station and indicates that the handover type of the first handover is base station initiated. Step S810 may, for example, be performed by the handover command receiving unit 722 in FIG. 7.

The flow then proceeds to step S820. At step S820, signal quality measurements are performed within a predetermined time period with respect to the first base station and the second base station. Step S820 may, for example, be performed by the signal quality measurement performing unit 724 in FIG. 7. According to some embodiments, step S820 may include starting a timer with a duration of S. Prior to expiration of the timer, the user equipment device may continuously measure the signal quality with respect to the first base station (i.e., the source base station) and the signal quality with respect to the second base station (i.e., the target base station). The signal quality measurements may be based on reference signals previously received from the base stations, or the user equipment device may transmit a request for reference signals to the base stations during step S820 and then perform the signal quality measurements based on the reference signals received from the base stations. Examples of reference signals may include synchronization signal blocks (SSB), channel state information reference signals (CSI-RS), and other reference signals known to those skilled in the art. According to embodiments of the present disclosure, the signal quality includes but is not limited to reference signal received power (RSRP), reference signal received quality (RSRQ), signal-to-interference-plus-noise ratio (SINR), and the like.

The flow then proceeds to step S830. At step S830, it is determined whether the signal quality between the user equipment device and the first base station and the signal quality between the user equipment device and the second base station meet predefined condition(s) within the predetermined time period. Step S830 may, for example, be performed by the signal quality measurement performing unit 724 in FIG. 7, or by another unit in the processing circuit 720 not shown. For example, the predefined condition may be that the signal quality between the user equipment device and the second base station exceeds a second signal quality threshold, or that the signal quality between the user equipment device and the first base station is below a first signal quality threshold and the signal quality between the user equipment device and the second base station exceeds a second signal quality threshold, or that the difference between the signal quality between the user equipment device and the second base station and the signal quality between the user equipment device and the first base station exceeds a third threshold, etc. If the result of step S830 is "yes", the flow proceeds to step S840; otherwise, it proceeds to step S850.

At step S840, in response to determining that the signal quality between the user equipment device and the first base station and the signal quality between the user equipment device and the second base station meet the predefined condition within the predetermined time period, the first handover is performed. Step S840 may, for example, be performed by the handover performing unit 726 in FIG. 7. According to some embodiments, in response to determining that the signal quality between the user equipment device and the first base station and the signal quality between the user equipment device and the second base station meet the predefined condition within the predetermined time period, the signal quality measurements may be stopped and the timer started in step S820 may be deactivated. According to some embodiments, performing the first handover may include a random access channel (RACH) procedure with the second base station, and transmitting an RRCReconfigurationComplete message to the second base station upon successful completion of the RACH procedure, and so forth.

At step S850, in response to determining that the signal quality between the user equipment device and the first base station and the signal quality between the user equipment device and the second base station do not meet the predefined condition within the predetermined time period, a measurement report can be transmitted to the first base station. According to some embodiments, determining that the signal quality between the user equipment device and the first base station and the signal quality between the user equipment device and the second base station do not meet the predefined condition within the predetermined time period may include: determining that the signal qualities still fail to meet the predefined condition when the timer started in step S820 expires. The measurement report may include results of each signal quality measurement performed between the user equipment device and the first base station, and between the user equipment device and the second base station, within the predetermined time period, or may only include results of the last signal quality measurements, etc. Upon receiving the measurement report, the first base station may examine the reported signal quality and ascertain that the user equipment device currently does not meet conditions for handover to the second base station.

The flow then proceeds to step S860. At step S860, a message indicating to stop the first handover and to change the handover type to user equipment device initiated may be received from the first base station. That is, the first base station informs the user equipment device that the handover may proceed in a traditional manner.

The flow then proceeds to step S870. At step S870, signal quality measurements may be performed with respect to the first base station and with respect to one or more base stations including the second base station, thereby beginning the user equipment device-initiated handover procedure. Following S870, the method 800 may optionally include one or more additional steps of the user equipment device-initiated handover, such as transmitting a measurement report to the first base station when the signal quality meets predetermined conditions, and so forth.

It should be understood that steps S850, S860, and S870 may be performed by any unit in the processing circuit 720 or by other units not shown. For example, step S870 may be performed by the signal quality measurement performing unit 724.

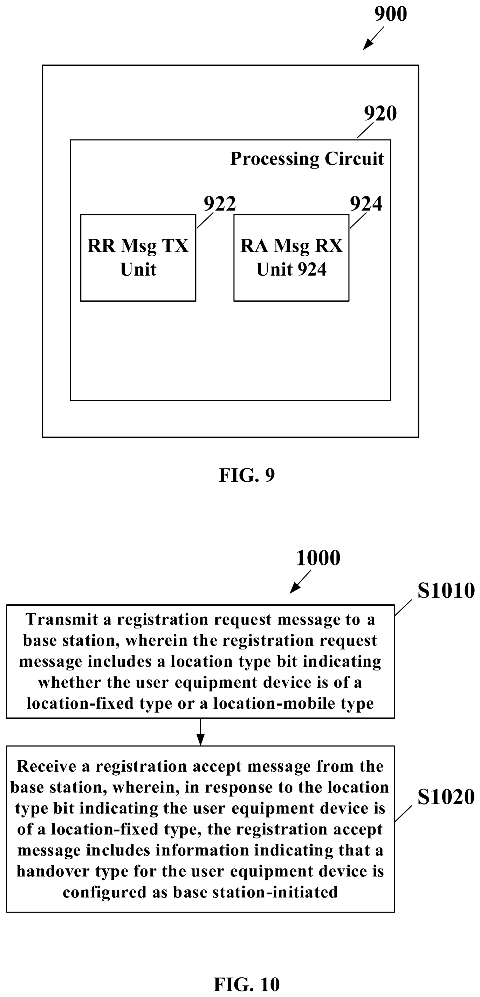

Methods and devices for registration for the user equipment device side in a non-terrestrial network according to some embodiments of the present disclosure are described below with reference to FIGS. 9 and 10. FIG. 9 illustrates an exemplary electronic device 900 for a user equipment device according to some embodiments of the present disclosure.

The electronic device 900 may correspond to any UE in FIGS. 1 and 2, or the electronic device 900 may be used to control operations of any UE in FIGS. 1 and 2. As shown in FIG. 9, the electronic device 900 may include a processing circuit 920.

According to embodiments of the present disclosure, the processing circuit 920 may be configured to: transmit a registration request message to a base station, where the registration request message includes a location type bit indicating whether the user equipment device is of a location-fixed type or a location-mobile type; and receive a registration accept message from the base station, where in response to the location type bit indicating the user equipment device is of a location-fixed type, the registration accept message includes information indicating that a handover type for the user equipment device is configured as base station-initiated.

In the exemplary structure of the device described above, the processing circuit 920 may be in the form of a general-purpose processor or a dedicated processing circuit. Furthermore, the processing circuit 920 may carry programs (software) for the circuitry (hardware) or the central processing device to operate.

According to embodiments of the present disclosure, the processing circuit 920 may include various units for implementing the aforementioned functions, such as a registration request message transmission (RR Msg TX) unit 922 configured to transmit a registration request message to the base station, and a registration accept message receiving (RA Msg RX) unit 924 configured to receive a registration accept message from the base station.

Similar to the processing circuit 720, the units included in the processing circuit 920 may be communicatively coupled to one another (not shown). It should be noted that although respective units are depicted as discrete units in FIG. 9, one or more of these units may also be combined into a single unit or split into multiple units. It should be noted that the aforementioned units represent logical modules defined by their specific functions rather than to limit their implementation. The processing circuit 920 may be implemented as including one or more other components in an electronic device at the user equipment device side, or it may be implemented as the electronic device at the user equipment device side. In practical implementation, the processing circuit 920 may be implemented as a chip (such as an integrated circuit module including a single wafer), a hardware component, or a complete product.

It should be understood that FIG. 9 merely illustrates a schematic structural configuration of an electronic device at the user equipment device side. Similar to electronic device 700, the electronic device 900 may also include other possible components (e.g., memory, etc.), which is not elaborated upon further herein.

Functions of various units in the processing circuit 920 of the electronic device 900 for the user equipment device of FIG. 9 are described below with reference to FIG. 10. FIG. 10 illustrates a flowchart of an exemplary registration method 1000 for a user equipment device in a non-terrestrial network, according to some embodiments of the present disclosure.

At step S1010, a registration request message is transmitted to a base station. The registration request message includes a location type bit indicating whether the user equipment device is of the location-fixed type or the location-mobile type. Step S1010 may, for example, be performed by the registration request message transmission unit 922 in FIG. 9. Examples of the registration request message and the location type bit are described in detail with reference to step S610 of FIG. 6 and not repeated here.

The flow then proceeds to step S1020. At step S1020, a registration accept message is received from the base station. In response to the location type bit indicating that the user equipment device is of the location-fixed type, the registration accept message includes information indicating that the handover type for the user equipment device is configured as base station-initiated. Step S1020 may, for example, be performed by the registration accept message receiving unit 924 in FIG. 9. Examples of the registration accept message are described in detail with reference to step S630 in FIG. 6 and not repeated here.

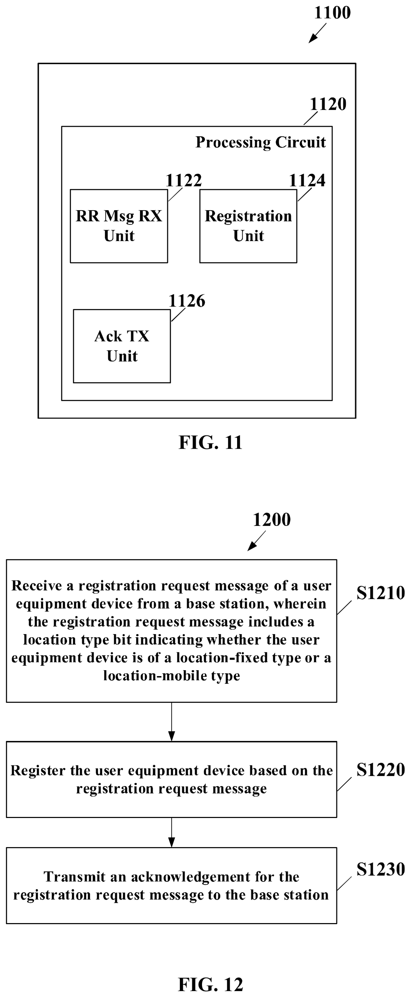

A registration method and device for a network function side in a non-terrestrial network according to some embodiments of the present disclosure is described below with reference to FIGS. 11 and 12. FIG. 11 illustrates an exemplary electronic device 1100 for a network function according to some embodiments of the present disclosure.

Electronic device 1100 may correspond to the network function (NF) in the core network of FIGS. 1 and 2, or the electronic device 1100 may be used to control operations of the network function in the core network of FIGS. 1 and 2. The network function may, for example, be an AMF, or may be any other suitable network function known at present or developed in the future. As shown in FIG. 11, the electronic device 1100 may include processing circuit 1120.

According to embodiments of the present disclosure, the processing circuit 1120 may be configured to: receive a registration request message of a user equipment device (e.g., any UE in FIGS. 1 and 2) from a base station, where the registration request message includes a location type bit indicating whether the user equipment device is of a location-fixed type or a location-mobile type; register the user equipment device based on the registration request message; and transmit an acknowledgement for the registration request message to the base station, where, in response to the location type bit indicating that the user equipment device is of the location-fixed type, the base station transmits a registration accept message to the user equipment device, the registration accept message including information indicating that a handover type for the user equipment device is configured as base station-initiated.

In the exemplary structure of the device described above, the processing circuit 1120 may be in the form of a general-purpose processor or a dedicated processing circuit. Furthermore, the processing circuit 1120 may carry programs (software) for causing the circuit (hardware) or central processing device to operate.

According to embodiments of the present disclosure, the processing circuit 1120 may include various units for implementing the aforementioned functions, such as a registration request message receiving (RR Msg RX) unit 1122 configured to receive a registration request message of the user equipment device from the base station, a registration unit 1124 configured to register the user equipment device based on the registration request message, and an acknowledgement transmission (Ack TX) unit 1126 configured to transmit an acknowledgement for the registration request message to the base station.

Similar to the processing circuit 520, the units included in the processing circuit 1120 may be communicatively coupled to one another (not shown). It should be noted that although respective units are depicted as discrete units in FIG. 11, one or more of these units may also be combined into a single unit or split into multiple units. It should be noted that the aforementioned units represent logical modules defined by their specific functions rather than to limit their implementation. The processing circuit 1120 may be implemented as including one or more other components of an electronic device for network functions, or it may be implemented as the electronic device for network functions. In practical implementation, the processing circuit 1120 may be implemented as a chip (such as an integrated circuit module including a single wafer), a hardware component, or a complete product.

It should be understood that FIG. 11 merely illustrates a schematic structural configuration of an electronic device for the network function. Similar to the electronic device 700, the electronic device 1100 may also include other possible components (e.g., memory, etc.), which is not elaborated upon further here.

Functions of various units in the processing circuit 1120 of the electronic device 1100 for the network function of FIG. 10 are described in detail below with reference to FIG. 12. FIG. 12 illustrates a flowchart of an exemplary registration method 1200 for a network function in a non-terrestrial network according to some embodiments of the present disclosure.

At step S1210, a registration request message of a user equipment device is received from a base station, where the registration request message includes a location type bit indicating whether the user equipment device is of a location-fixed type or a location-mobile type. Step S1210 may, for example, be performed by the registration request message receiving unit 1122 of FIG. 11. Examples of the registration request message and the location type bit are described in detail in the description of step S610 of FIG. 6 above and are not repeated here.

The flow then proceeds to step S1220. At step S1220, the user equipment device is registered based on the registration request message. Step S1220 may be performed, for example, by the registration unit 1124 of FIG. 11. The registration procedure is exemplified in the description of step S620 of FIG. 6 above and are not repeated here.

The flow then proceeds to step S1230. At step S1230, an acknowledgement for the registration request message is transmitted to the base station. In response to the location type bit indicating that the user equipment device is of the location-fixed type, the base station transmits a registration accept message to the user equipment device upon receiving the acknowledgement for the registration request message from the network function, the registration accept message including information indicating that the handover type for the user equipment device is configured as base station-initiated. Step S1230 may be performed, for example, by the acknowledgement transmission unit 1126 of FIG. 11. An example of the registration accept message is described in detail in the description of step S630 of FIG. 6 above and is not repeated here.

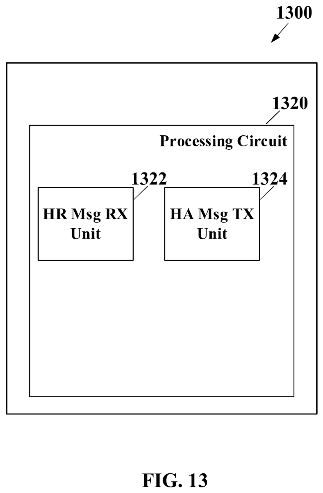

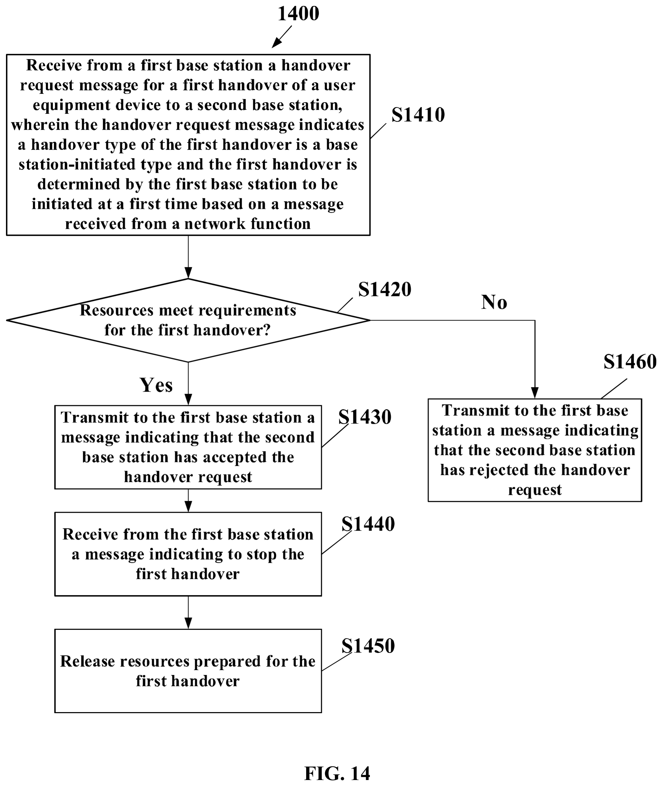

A handover method and device for a second base station side in a non-terrestrial network according to some embodiments of the present disclosure is described below with reference to FIGS. 13 and 14. FIG. 13 illustrates an exemplary electronic device 1300 for a second base station according to some embodiments of the present disclosure. The electronic device 1300 may correspond to the target base station in FIGS. 1 and 2, or the electronic device 1300 may be used to control operations of the target base station in FIGS. 1 and 2. As shown in FIG. 13, the electronic device 1300 may include processing circuit 1320.

According to embodiments of the present disclosure, the processing circuit 1320 may be configured to: receive from the first base station a handover request message for a first handover of a user equipment device to the second base station, where the handover request message indicates that a handover type of the first handover is a base station-initiated type and the first handover is determined, to be initiated at a first time, by a first base station based on a message received from a network function; and in response to determining that resources meet requirements for the first handover, transmit to the first base station a message indicating that the second base station has accepted the handover request.

Similar to the processing circuit 320, in the exemplary structure of the device described above, the processing circuit 1320 may take the form of a general-purpose processor or a dedicated processing circuit, such as an ASIC. Furthermore, the processing circuit 1320 may carry programs (software) for operating the circuit (hardware) or the central processing device.

According to embodiments of the present disclosure, the processing circuit 1320 may include various units for implementing the aforementioned functions, such as a handover request message receiving (HR Msg RX) unit 1322 configured to receive from the first base station the handover request message for the first handover of the user equipment device to the second base station, and a handover accept message transmission (HA Msg TX) unit 1324 configured to transmit to the first base station the message indicating that the second base station has accepted the handover request, in response to determining that resources meet requirements for the first handover.

These units included in the processing circuit 1320 may be communicatively coupled to one another (not shown). It should be noted that although respective units are depicted as discrete units in FIG. 13, one or more of these units may also be combined into a single unit or split into multiple units. It should be noted that the aforementioned units represent logical modules defined by their specific functions rather than to limit their implementation. The processing circuit 1320 may be implemented as including one or more other components in an electronic device at the base station side, or it may be implemented as the electronic device at the base station side. In practical implementation, the processing circuit 1320 may be implemented as a chip (such as an integrated circuit module including a single wafer), a hardware component, or a complete product.

It should be understood that FIG. 13 merely illustrates a schematic structural configuration of an electronic device at the base station side, and the electronic device 1300 may also include other possible components (e.g., memory, etc.).

Functions of the units in the processing circuit 1320 of the electronic equipment 1300 for the second base station in FIG. 13 are described below with reference to FIG. 14. FIG. 14 illustrates a flowchart of an exemplary handover method 1400 for a second base station in a non-terrestrial network according to some embodiments of the present disclosure.

At step S1410, a handover request message for a first handover of a user equipment device to a second base station is received from a first base station, where the handover request message indicates that the handover type of the first handover is base station-initiated, and the first handover is determined, to be initiated at a first time, by the first base station based on a message received from a network function. Step S1410 may, for example, be performed by the handover request message receiving unit 1322 in FIG. 13. According to some embodiments, for example, in the Xn interface-based handover scenario illustrated in FIG. 1, receiving the handover request message from the first base station may include receiving the handover request message directly from the first base station. According to some embodiments, for example, in the N2 interface-based handover scenario illustrated in FIG. 2, the first base station transmits handover requirements to the network function, which in turn transmits the handover request message to the second base station upon receiving the handover requirements. In that case, receiving the handover request message from the first base station may include receiving the handover request message from the network function.

The flow then proceeds to step S1420. At step S1420, it is determined whether resources meet the requirements of the first handover. In some embodiments, the handover request message may include relevant information such as a number of sessions, and the second base station may examine available resources (e.g., a number of supported sessions) to determine whether the requirements of the first handover can be met. In response to determining that resources meet the requirements of the first handover, the flow proceeds to step S1430; otherwise, it proceeds to step S1460. At step S1460, in response to determining that resources do not meet the requirements of the first handover, a message indicating that the second base station has rejected the handover request is transmitted to the first base station. Upon receiving the message indicating that the second base station has rejected the handover request, the first base station may transmit a message to the user equipment device indicating to change the handover type to a user equipment device-initiated type.

At step S1430, in response to determining that the resources meet the requirements of the first handover, a message indicating that the second base station has accepted the handover request is transmitted to the first base station. Step S1430 may, for example, be performed by the handover accept message transmission unit 1324 in FIG. 13. According to some embodiments, for example, in the Xn interface-based handover scenario in FIG. 1, transmitting the message to the first base station indicating that the second base station has accepted the handover request may include transmitting an acknowledgement message for the handover request directly to the first base station. In some embodiments, for example, in the N2 interface-based handover scenario in FIG. 2, transmitting the message to the first base station indicating that the second base station has accepted the handover request may include transmitting an acknowledgement message for the handover request to the network function, and the network function may then transmit a handover command to the first base station in response to receiving the acknowledgement message. The first base station may transmit the handover command to the user equipment device, which performs signal quality measurements within a predetermined time period. If the signal quality meets some predefined conditions, the first handover may proceed. In that case, one or more steps of the first handover may optionally be performed following step S1430, such as receiving an SN state transition message and downlink data from the first base station or transmitting a path handover request to an AMF.

The flow may then proceed to step S1440. At step S1440, a message indicating to stop the first handover is received from the first base station. If the handover fails for any reasons, the first base station may transmit a message to the second base station to stop the first handover. For example, when the signal quality measured by the user equipment device fails to meet a predefined condition, the user equipment device may transmit a measurement report to the first base station. Based on the report, the first base station may determine that conditions are currently not met for the user equipment device to handover to the second base station, thereby transmitting a message to the second base station to stop the first handover.

The flow may proceed to step S1450. At step S1450, resources prepared for the first handover are released. For example, the resources may be prepared in step S1430 or after step S1430. Steps S1420, S1440, S1450, and S1460 may be performed, for example, by any unit in FIG. 13 or by a unit not shown.

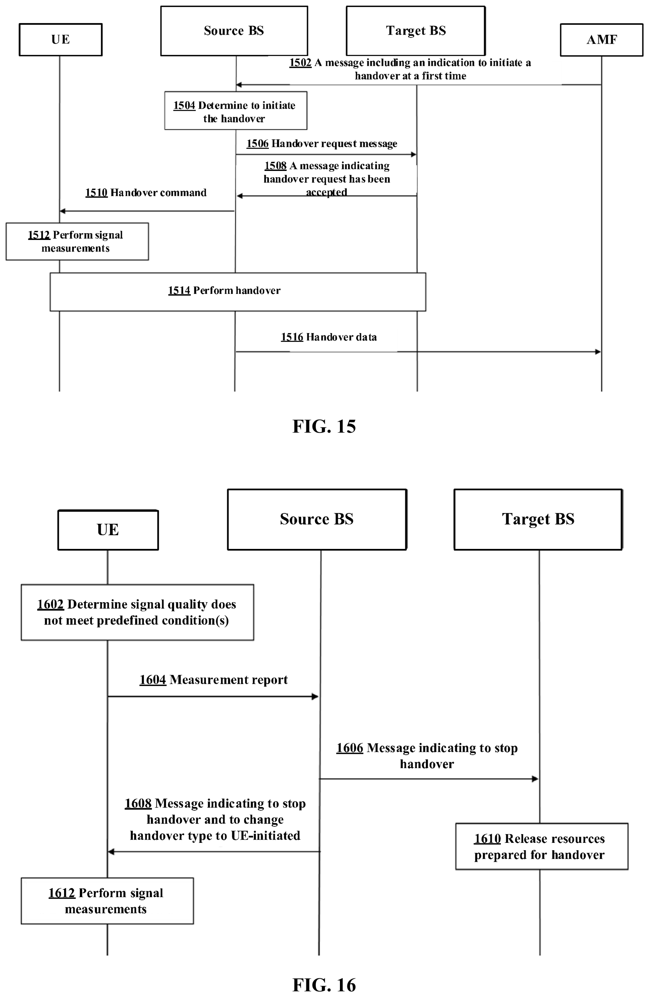

Information exchanges for handover and registration procedures in a non-terrestrial network according to some embodiments of the present disclosure are described below with reference to FIGS. 15 to 22. FIG. 15 illustrates an information exchange diagram for a cell handover procedure in a non-terrestrial network according to some embodiments of the present disclosure. The non-terrestrial network includes a user equipment device (UE), a source base station, a target base station, a satellite (not shown), and an AMF. The user equipment device may communicate with the source base station or the target base station located on satellites (e.g., in the non-transparent satellite system of FIG. 1), or may communicate with the source base station or target base station located on the ground via satellites (e.g., in the transparent satellite system of FIG. 1). The handover procedure is an Xn interface-based handover procedure, where the source base station and the target base station may exchange information based on the Xn interface. It should be understood that although the AMF is shown in FIG. 15 as an example of a network function, any other suitable network function may be employed.

As illustrated in FIG. 15, at 1502, the AMF may transmit a message to the source base station, the message including an indication to initiate a handover at a first time. The message may include handover model parameters, where the handover model parameters include at least: an identifier of the user equipment device; a set of handover times including the first time; an identifier of the source base station; and an identifier of the target base station. For example, the handover model parameters may include: {UE_0, T1, gNB_1, gNB_2}, {UE_0, T2, gNB_2, gNB_3}, {UE_0, T3, gNB_3, gNB_4}. Here, UE_0 denotes the UE identifier, T1, T2, and T3 denote handover times (or time periods), and gNB_1, gNB_2, gNB_3, and gNB_4 denote identifiers of base stations.

At 1504, the source base station may determine to initiate a handover. For example, assuming the identifier of the source base station is gNB_1, upon receiving the model parameters, the source base station may determine that a handover of UE_0 to the target base station gNB_2 can be initiated at time T1. If T1 denotes a time period, the source base station may additionally select, based on a predetermined stategy, a specific point within the period (e.g., an earliest point, a midpoint, etc.) to initiate the handover. At 1506, the source base station may transmit a handover request message to the target base station (e.g., gNB_2), the handover request message indicating that a handover type of the handover is base station-initiated.

At 1508, the target base station may transmit a message to the source base station indicating accept of the handover request. At 1510, the source base station may transmit a handover command to the user equipment device, indicating the handover type as base station-initiated. At 1512, the user equipment device may perform signal measurements. The user equipment device may measure the signal quality between itself and the source base station, as well as the signal quality between itself and the target base station.

At 1514, the UE may perform the handover to the target base station. This may include multiple interactions between the UE, the source base station, and the target base station as described above, and may also include interactions with the AMF (e.g., the target base station transmitting a path handover request to the AMF), which are not repeated here.

At 1516, upon completion of the handover, the source base station may transmit handover data to the AMF. The handover data may include one or more of: an identifier of the user equipment device, a time to initiate a handover as determined by the source base station, an identifier of the source base station, an identifier of the target base station, an identifier of a satellite associated with the source base station, an identifier of a satellite associated with the target base station, weather conditions, etc. The handover data may be transmitted after each handover is completed or may be transmitted in batches. The AMF may analyze (e.g., learn from) the handover data of the happened base station-initiated handovers to refine handover model parameters.

It should be noted that the information exchange diagram shown in FIG. 15 is merely illustrative and is not intended to be limiting. The diagram may include more or fewer steps, and steps may be performed in an order different from that depicted in the diagram. It should be understood that details of some operations in FIG. 15 are described in detail with reference to FIGS. 4, 8, and 14 and are not repeated here.

FIG. 16 illustrates an information exchange diagram for a cell handover procedure in a non-terrestrial network according to some embodiments of the present disclosure. The handover procedure may occur after step 1512 in FIG. 15.

As illustrated in FIG. 16, at 1602, the user equipment device may determine that the signal quality does not meet predefined condition(s). At 1604, the user equipment device may transmit a measurement report to the source base station.

At 1606, the source base station may transmit a message to the target base station indicating to stop the handover. In the Xn interface-based handover, the message may be transmitted directly to the target base station; whereas in the N2 interface-based handover, the message may be forwarded to the target base station via the AMF. At 1608, the source base station may transmit a message to the user equipment device indicating to stop the handover and to change the handover type to the user equipment device-initiated. Steps 1606 and 1608 may occur concurrently, or step 1608 may precede step 1606.

At step 1612, the user equipment device may perform signal measurements to prepare for performing a user equipment device-initiated handover. At step 1610, the target base station may release resources prepared for the handover. Steps 1610 and 1612 may occur concurrently or in any order.

It should be noted that the information exchange diagram shown in FIG. 16 provides merely an example and is not intended to be limiting. The diagram may include more or fewer steps, and steps may be performed in an order different from that depicted in the diagram. It should be understood that details of some operations in FIG. 16 are described in detail with reference to FIGS. 4, 8, and 14 and are not repeated here.

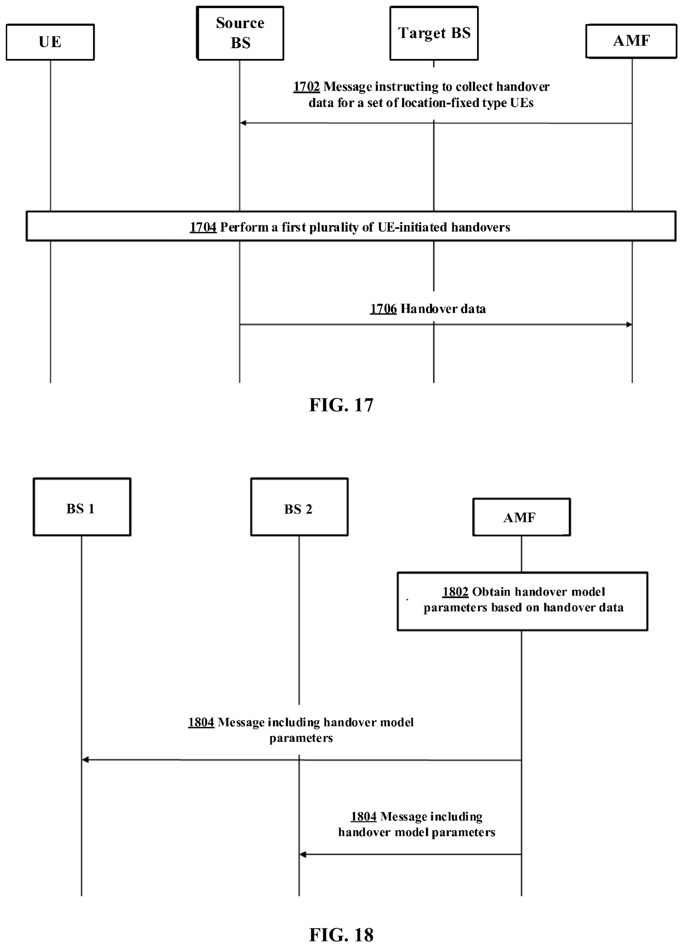

FIG. 17 illustrates an information exchange diagram for a handover data collection procedure in a non-terrestrial network according to some embodiments of the present disclosure. The handover procedure may occur prior to step 1502 of FIG. 15. The AMF requires collection of sufficient data to learn handover patterns of user equipment devices.

As illustrated in FIG. 17, at 1702, the AMF may transmit a message to the source base station instructing the source base station to collect handover data of user equipment device-initiated handovers for a set of location-fixed type user equipment devices. The AMF may transmit the message to one or more base stations in the non-terrestrial network (including the target base station in FIG. 17) to obtain data when the user equipment device performs handovers between cells of different base stations. The message may be transmitted once or multiple times. Considering the handover patterns of location-fixed type user equipment devices tend to be more regular, priority is given to collecting handover data for such devices. It should be understood that the method of the present disclosure may also be applied to user equipment device that is not of the location-fixed type, provided that its handover exhibits a certain regularity (e.g., periodicity).

At 1704, a first plurality of user equipment device-initiated handover operations may be performed. The process may involve multiple interactions between the user equipment device, (one or more) source base stations, (one or more) target base stations, and the AMF.

At 1706, the source base station may transmit the handover data to the AMF. The target base station in FIG. 17 may also transmit to the AMF handover data of handovers when it serves as the source base station. Handover data may be transmitted separately or in batches. Handover data may include one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions, etc. The handover data may, for example, be {UE_1, T2, RSRP_S, RSRP_T, gNB_2, gNB_4, ST_2, ST_4}, where UE_1 denotes an identifier of the user equipment device, T2 denotes the time to initiate the handover determined by the source base station, RSRP_S denotes the RSRP between the user equipment device and the source base station reported by the user equipment device based on which the source base station determines to initiate the handover, RSRP_T denotes the RSRP between the signal quality between the user equipment device and the target base station reported by the user equipment device based on which the source base station determines to initiate the handover, gNB_2 and gNB_4 are identifiers of the source and target base stations respectively, and ST_2 and ST_4 are identifiers of the satellites associated with the source and target base stations respectively.

It should be noted that the information exchange diagram shown in FIG. 17 is merely illustrative and is not intended to be limiting. The diagram may include more or fewer steps, and the steps may be performed in an order different from that depicted in the diagram. It should be understood that details of some operations in FIG. 17 are described in detail with reference to FIG. 4 and are not repeated here.

FIG. 18 illustrates an information exchange diagram for a handover model parameter acquisition procedure in a non-terrestrial network according to some embodiments of the present disclosure. The non-terrestrial network includes a base station 1, a base station 2, a satellite (not shown), and an AMF. The base station 1 and base station 2 may respectively be any of the source base station and the target base station in FIGS. 16 and 17 or may be other base stations in the non-terrestrial network.

As illustrated in FIG. 18, at step 1802, the AMF may obtain handover model parameters based on handover data. For example, the AMF may train a machine learning model (e.g., logistic regression, artificial neural networks, etc.) using the received handover data for the first plurality of handovers in FIG. 17 as training data; and generate handover model parameters by inputting the identifier of the user equipment device into the trained machine learning model.

At 1804, the AMF may transmit a message including the handover model parameters to the base station 1 and base station 2, and the message may be the message transmitted at 1502 in FIG. 15. The AMF may transmit the message to all base stations in the non-terrestrial network, or alternatively, may transmit it solely to the source base station included in the handover model parameters.

It should be noted that the information exchange diagram shown in FIG. 18 is merely illustrative and is not intended to be limiting. The diagram may include more or fewer steps, and the steps may be performed in an order different from that depicted in the diagram. It should be understood that details of some operations in FIG. 18 are described in detail with reference to FIG. 4 and are not repeated here.

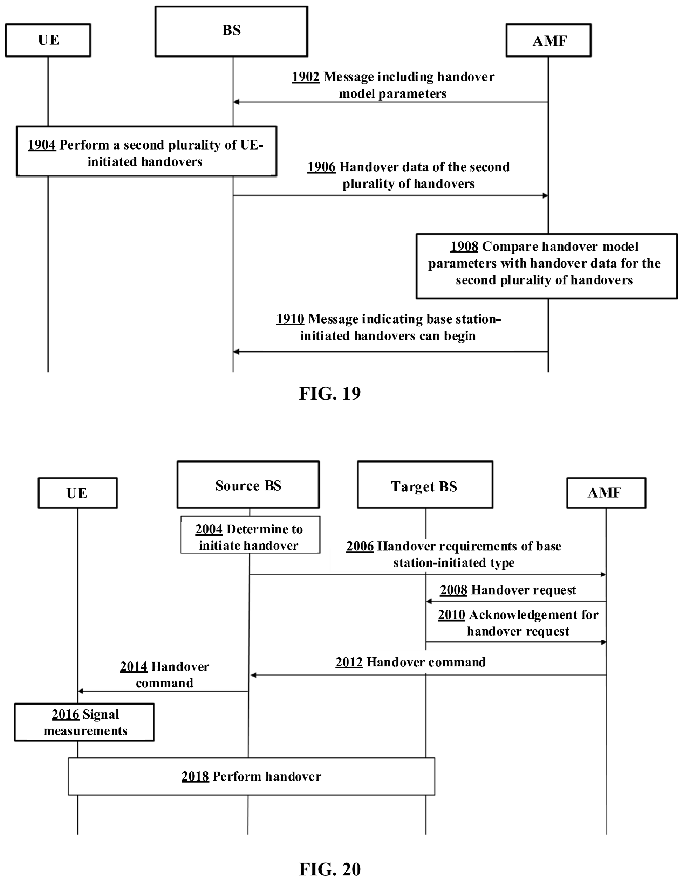

FIG. 19 illustrates an information exchange diagram for a handover model parameter testing procedure in a non-terrestrial network according to some embodiments of the present disclosure. The non-terrestrial network includes a user equipment device, a base station, a satellite (not shown), and an AMF. The base station may be the source base station in FIGS. 16 and 17 or may be another base station in the non-terrestrial network. The handover model parameter testing procedure enables verification of accuracy of the handover model parameters.

As illustrated in FIG. 19, at 1902, the AMF may transmit a message including handover model parameters to the base station. The message may be similar to that transmitted at 1804 in FIG. 18.

At 1904, a second plurality of user equipment device initiated handovers may be performed. It should be noted that at this stage, the base station-initiated handover is not initiated, and the user equipment device-initiated handover is still employed. Performing of the second plurality of handovers includes one or more interactions between the user equipment device, the base station, the AMF, and other (one or more) base stations. At 1906, the base station may transmit handover data of the second plurality of handovers to the AMF. Step 1906 may also include one or more other base stations in the non-terrestrial network transmitting handover data to the AMF.

At 1908, the AMF may compare the handover model parameters with the handover data for the second plurality of handovers. The AMF may compare corresponding parameters between these two, and if the corresponding parameters match (being identical or differing within a certain threshold, e.g., 5 seconds for a difference of handover times), the handover model parameters may be determined to match the handover data; otherwise, a mismatch may be determined. A proportion of matched handovers (i.e., the match rate) exceeding a threshold (e.g., 70%, 80%, or 90%, etc.) may indicate that the accuracy of the handover model parameters is acceptable.

At 1910, the AMF may transmit a message to the base station indicating that base station-initiated handovers can begin. For example, the message may indicate a value of the match rate, or whether the match rate exceeds the threshold. Initiating a base station-initiated handover only after the accuracy meets expectations can enhance handover success rates while reducing signaling overhead and communication latency. In some embodiments, step 1504 of FIG. 15 is performed by the source base station in response to receiving the message indicating that base station-initiated handovers can begin.

It should be noted that the information exchange diagram depicted in FIG. 19 provides merely illustrative examples and is not intended to be limiting. The diagram may include more or fewer steps, and steps may be performed in an order different from that depicted. It should be understood that details of some operations in FIG. 19 are described in detail with reference to FIG. 4 and are not repeated here. Furthermore, the procedures in FIGS. 16 to 19 may be applicable to both the Xn interface-based handover and the N2 interface-based handover.

FIG. 20 illustrates an information exchange diagram for a cell handover procedure in a non-terrestrial network according to some embodiments of the present disclosure. The non-terrestrial network includes a user equipment device (UE), a source base station, a target base station, a satellite (not shown), and an AMF. The handover procedure is an N2 interface-based handover, where the source base station and the target base station may exchange information via the N2 interface with the core network. It should be understood that although the AMF is shown in FIG. 20 as an example of a network function, any other suitable network function may be employed. Some steps in FIG. 20 are similar to those in FIG. 15, and descriptions thereof are omitted here.

As illustrated in FIG. 20, at 2004, the source base station may determine to initiate a handover. At 2006, the source base station may transmit handover requirements of the base station-initiated type to the AMF, where the type of the handover requirements is configured as base station-initiated.

At 2008, the AMF may transmit a handover request message to the target base station, where the handover request message indicates that the handover type is base station-initiated. At 2010, the target base station may transmit an acknowledgement message for the handover request to the AMF. At 2012, the AMF may transmit a handover command to the source base station, indicating the handover type as base station initiated. At 2014, the source base station may transmit a handover command to the user equipment device.

Similar to 1512, at 2016, the user equipment device may perform signal measurements. The user equipment device may measure the signal quality between itself and the source base station, as well as the signal quality between itself and the target base station.

Similar to 1514, at 2018, the UE may perform the handover to the target base station. This may include multiple interactions between the UE, the source base station, and the target base station as described above, and may also include interactions with the AMF (e.g., the target base station transmitting a path handover request to the AMF), which are not repeated here.

It should be noted that the information exchange diagram shown in FIG. 20 provides merely an example and is not intended to be limiting. The diagram may include more or fewer steps, and steps may be performed in an order different from that depicted in the diagram. It should be understood that details of some operations in FIG. 20 are described in detail with reference to FIGS. 4, 8, and 14 and are not repeated here.

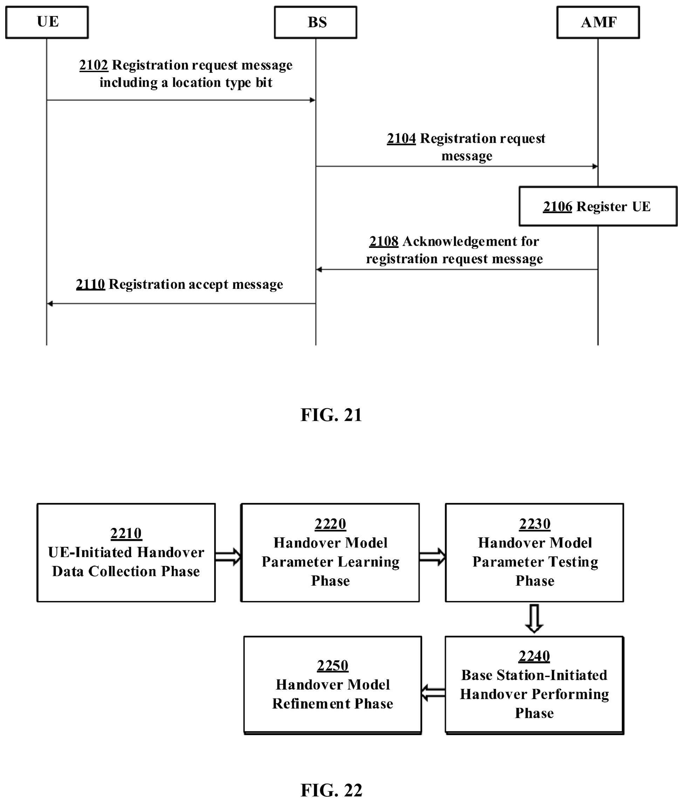

FIG. 21 illustrates an information exchange diagram for a user equipment device registration procedure in a non-terrestrial network according to some embodiments of the present disclosure. The non-terrestrial network includes a user equipment device (UE), a base station, a satellite (not shown), and an AMF. It should be understood that although the AMF is shown in FIG. 20 as an example of a network function, any other suitable network function may be employed.

As illustrated in FIG. 21, at step 2102, the user equipment device may transmit a registration request message to the base station. The registration request message includes a location type bit, indicating whether the user equipment device is of a location-fixed type or a location-mobile type. When the location type bit indicates the user equipment device is of a location-fixed type, the registration request message may additionally include a field indicating geographical location information of the user equipment device. At 2104, the base station may transmit the registration request message to the AMF.

At 2106, the AMF may register the user equipment device. At 2108, the AMF may transmit an acknowledgement for the registration request message to the base station. At 2110, the base station may transmit a registration accept message to the user equipment device.

It should be noted that the information exchange diagram shown in FIG. 21 is merely illustrative and is not intended to be limiting. The diagram may include more or fewer steps, and the steps may be performed in an order different from that depicted in the diagram. It should be understood that details of some operations in FIG. 21 are described in detail with reference to FIGS. 6, 12, and 12, and are not repeated here.

FIG. 22 illustrates a schematic diagram of a cell handover procedure for a non-terrestrial network according to some embodiments of the present disclosure. As illustrated in FIG. 22, the cell handover procedure may generally include five phases: a UE-initiated handover data collection phase 2210, a handover model parameter learning phase 2220, a handover model parameter testing phase 2230, a base station-initiated handover performing phase 2240, and a handover model refinement phase 2250. The UE-initiated handover data collection phase 2210 may correspond to the procedure illustrated in FIG. 17; the handover model parameter learning phase 2220 may correspond to the procedure illustrated in FIG. 18; the handover model parameter testing phase 2230 may correspond to the procedure illustrated in FIG. 19; and the base station-initiated handover performing stage 2240 and the handover model refinement phase 2250 may correspond to the procedures illustrated in FIGS. 15, 16, or 20. The last two phases, namely the base station-initiated handover performing stage 2240 and the handover model refinement phase 2250, may be repeated to progressively enhance the accuracy of the handover model and to improve the handover efficiency.

### Technical Effects of the Disclosure

The method for a cell handover in a non-terrestrial network (NTN) proposed herein enables determination of initiating the handover without requiring the user equipment device to measure the cell signal quality or transmitting associated signaling, thereby reducing overhead and conserving energy consumption. The network function learns the handover model of location-fixed terminals. Once the handover model of a terminal is known, cell signal quality measurements by the terminal may be not necessary, and handovers can be initiated by the base station. Date related to each base station-initiated handover is fed back into the learned model, thereby progressively enhancing the accuracy of the handover model and improving handover efficiency. If the base station-initiated handover fails, the procedure reverts to the user equipment device-initiated handover, thereby ensuring the normal operation of the communication system.

Solutions of the present disclosure may be implemented in the following exemplary manner.

Clause 1. An electronic device for a first base station in a non-terrestrial network, wherein the non-terrestrial network further comprises a user equipment device capable of communicating with the first base station, a second base station, a network function, and a satellite, the electronic device comprising a processing circuit configured to cause the first base station to perform following operations:
determining, based on a message received from the network function, that a first handover of the user equipment device to the second base station is to be initiated at a first time;
transmitting a handover request message to the second base station, wherein the handover request message indicates that a handover type of the first handover is a base station-initiated type; and
transmitting a handover command to the user equipment device, in response to receiving a message indicating that the second base station has accepted the handover request, wherein the handover command instructs the user equipment device to perform the first handover and indicates that the handover type of the first handover is the base station-initiated type.

Clause 2. The electronic device according to clause 1, wherein the processing circuit is further configured to cause the first base station to perform following operations:
receiving a measurement report from the user equipment device, wherein the measurement report indicates that at least one of a signal quality between the user equipment device and the first base station or a signal quality between the user equipment device and the second base station does not meet a predefined condition;
transmitting to the second base station a message indicating to stop the first handover; and
transmitting to the user equipment device a message indicating to stop the first handover and to change the handover type to a user equipment device-initiated type.

Clause 3. The electronic device according to clause 1, wherein the processing circuit is further configured to cause the first base station to perform following operations:
after completion of the first handover, transmitting handover data of the first handover to the network function.

Clause 4. The electronic device according to any of clauses 1 to 3, wherein the processing circuit is further configured to cause the first base station to perform following operations:
transmitting to the user equipment device a message indicating to change the handover type to a user equipment device-initiated type, in response to receiving a message indicating that the second base station has rejected the handover request.

Clause 5. The electronic device according to any of clauses 1 to 3, wherein transmitting the handover request message to the second base station comprises:
transmitting the handover request message directly to the second base station, or
transmitting a handover requirement to the network function, wherein a type of the handover requirement is configured as the base station-initiated type, and wherein the handover request message is transmitted to the second base station by the network function in response to receiving the handover requirement.

Clause 6. The electronic device according to any of clauses 1 to 3, wherein the message indicating that the second base station has accepted the handover request is an acknowledgement message for the handover request received from the second base station or a handover command received from the network function.

Clause 7. The electronic device according to any of clauses 1 to 3, wherein the message received from the network function comprises handover model parameters, wherein the handover model parameters comprise at least an identifier of the user equipment device, a set of handover times comprising the first time, an identifier of the first base station, and an identifier of the second base station.

Clause 8. The electronic device according to clause 7, wherein the user equipment device is a location-fixed type user equipment device, and the processing circuit is further configured to cause the first base station to perform following operations:
prior to the first handover, receiving from the network function a message instructing the first base station to collect handover data for a set of location-fixed type user equipment devices comprising the user equipment device;
performing a first plurality of handovers of user equipment device-initiated type with user equipment devices in the set of location-fixed type user equipment devices; and
transmitting handover data of the first plurality of handovers to the network function, wherein the first plurality of handovers occur prior to the first handover,
wherein the handover model parameters are obtained by the network function based on the handover data of the first plurality of handovers.

Clause 9. The electronic device according to clause 7, wherein the processing circuit is further configured to cause the first base station to perform following operations:
after receiving the handover model parameters from the network function, performing a second plurality of handovers of user equipment device-initiated type with the user equipment device;
transmitting handover data of the second plurality of handovers to the network function, wherein the second plurality of handovers occur prior to the first handover; and
receiving from the network function a message indicating that a handover of base station-initiated type can begin, wherein determining to initiate the first handover of the user equipment device to the second base station at the first time is performed at least in response to receiving the message indicating that the handover of base station-initiated type can begin.

Clause 10. The electronic device according to clauses 8 or 9, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

Clause 11. The electronic device according to clause 8, wherein the handover model parameters are obtained by the network function through following operations:
training a machine learning model using the handover data of the first plurality of handovers as training data; and
generating the handover model parameters by inputting the identifier of the user equipment device into the trained machine learning model.

Clause 12. An electronic device for a base station in a non-terrestrial network, wherein the non-terrestrial network further comprises a user equipment device capable of communicating with the base station, a network function, and a satellite, the electronic device comprising a processing circuit configured to cause the base station to perform following operations:
receiving a registration request message from the user equipment device, wherein the registration request message comprises a location type bit indicating whether the user equipment device is of a location-fixed type or a location-mobile type;
transmitting the registration request message to the network function; and
based on an acknowledgement for the registration request message received from the network function, transmitting a registration accept message to the user equipment device, wherein, in response to the location type bit indicating that the user equipment device is of the location-fixed type, the registration accept message comprises information indicating that a handover type for the user equipment device is configured as base station-initiated.

Clause 13. The electronic device according to clause 12, wherein when the location type bit indicates that the user equipment device is of the location-fixed type, the registration request message further comprises a field indicating geographical location information of the user equipment device.

Clause 14. An electronic device for a user equipment device in a non-terrestrial network, wherein the non-terrestrial network further comprises a first base station capable of communicating with the user equipment device, a second base station capable of communicating with the first base station, a network function, and a satellite, the electronic device comprising a processing circuit configured to cause the user equipment device to perform following operations:
receiving a handover command from the first base station, wherein the handover command instructs the user equipment device to perform a first handover to the second base station and indicates that a handover type of the first handover is a base station-initiated type;
performing signal quality measurements with the first base station and signal quality measurements with the second base station within a predetermined time period; and
performing the first handover in response to determining that, within the predetermined time period, a signal quality between the user equipment device and the first base station and a signal quality between the user equipment device and the second base station meet a predefined condition.

Clause 15. The electronic device according to clause 14, wherein:
the first base station determines to initiate the first handover at a first time based on a message received from the network function;
the first base station transmits a handover request message to the second base station, wherein the handover request message indicates that the handover type of the first handover is the base station-initiated type; and
the handover command is transmitted by the first base station to the user equipment device in response to receiving a message indicating that the second base station has accepted the handover request.

Clause 16. The electronic device according to clause 14 or 15, wherein the processing circuit is further configured to cause the user equipment device to perform following operations:
in response to determining that, within the predetermined time period, at least one of the signal quality between the user equipment device and the first base station or the signal quality between the user equipment device and the second base station does not meet the predefined condition:
transmitting a measurement report to the first base station;
receiving from the first base station a message indicating to stop the first handover and to change the handover type to a user equipment device-initiated type; and
performing signal quality measurements with the first base station and signal quality measurements with one or more base stations comprising the second base station.

Clause 17. The electronic device according to clause 15, wherein the processing circuit is further configured to cause the user equipment device to perform following operations:
receive from the first base station a message indicating to change the handover type to a user equipment device-initiated type, wherein the message is transmitted to the user equipment device by the first base station in response to receiving a message indicating that the second base station has rejected the handover request.

Clause 18. The electronic device according to clause 15, wherein the first base station transmitting the handover request message to the second base station comprises:
the first base station transmitting the handover request message directly to the second base station, or
the first base station transmitting a handover requirement to the network function, wherein a type of the handover requirement is configured as the base station-initiated type, and wherein the handover request message is transmitted to the second base station by the network function in response to receiving the handover requirement.

Clause 19. The electronic device according to clause 15, wherein the message indicating that the second base station has accepted the handover request is an acknowledgement message for the handover request received by the first base station from the second base station, or a handover command received by the first base station from the network function.

Clause 20. The electronic device according to clause 15, wherein the message received by the first base station from the network function comprises handover model parameters, wherein the handover model parameters comprise at least an identifier of the user equipment device, a set of handover times comprising the first time, an identifier of the first base station, and an identifier of the second base station.

Clause 21. The electronic device according to clause 20, wherein the user equipment device is of a location-fixed type, and wherein:
prior to the first handover, the first base station receives from the network function a message instructing the first base station to collect handover data for a set of location-fixed type user equipment devices comprising the user equipment device;
the first base station performs a first plurality of handovers of user equipment device-initiated type with user equipment devices in the set of location-fixed type user equipment devices;
the first base station transmits to the network function handover data of the first plurality of handovers, wherein the first plurality of handovers occurs prior to the first handover; and
the handover model parameters are obtained by the network function based on the handover data of the first plurality of handovers.

Clause 22. The electronic device according to clause 20, wherein:
after receiving the handover model parameters from the network function, the first base station performs a second plurality of handovers of user-initiated type with the user equipment device;
the first base station transmits handover data of the first plurality of handovers to the network function, wherein the second plurality of handovers occur prior to the first handover;
the first base station receives from the network function a message indicating that a handover of the base station-initiated type can begin, wherein determining to initiate the first handover of the user equipment device to the second base station at the first time is performed at least in response to receiving the message indicating that the handover of the base station-initiated type can begin.

Clause 23. The electronic device according to clause 21 or 22, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

Clause 24. The electronic device according to clause 21, wherein the handover model parameters are obtained by the network function through following operations:
training a machine learning model using the handover data of the first plurality of handovers as training data; and
generating the handover model parameters by inputting the identifier of the user equipment device into the trained machine learning model.

Clause 25. An electronic device for a user equipment device in a non-terrestrial network, wherein the non-terrestrial network further comprises a base station capable of communicating with the user equipment device, a network function, and a satellite, the electronic device comprising a processing circuit configured to cause the user equipment device to perform following operations:
transmitting a registration request message to the base station, wherein the registration request message comprises a location type bit indicating whether the user equipment device is of a location-fixed type or a location-mobile type; and
receiving a registration accept message from the base station, wherein, in response to the location type bit indicating the user equipment device is of the location-fixed type, the registration accept message comprises information indicating that a handover type for the user equipment device is configured as base station-initiated.

Clause 26. The electronic device according to clause 25, wherein when the location type bit indicates that the user equipment device is of the location-fixed type, the registration request message further comprises a field indicating geographical location information of the user equipment device.

Clause 27. An electronic device for a network function in a non-terrestrial network, wherein the non-terrestrial network further comprises a user equipment device capable of communicating with the network function, a first base station, a second base station, and a satellite, the electronic device comprising a processing circuit configured to cause the network function to perform following operations:
transmit a message to the first base station, wherein the message comprises an indication to initiate, at a first time, a first handover of the user equipment device to the second base station,
wherein the first base station transmits a handover request message to the second base station, wherein the handover request message indicates that a handover type of the first handover is a base station-initiated type, and
wherein, in response to receiving a message indicating that the second base station has accepted the handover request, the first base station transmits a handover command to the user equipment device, wherein the handover command instructs the user equipment device to perform the first handover and indicates that the handover type of the first handover is the base station-initiated type.

Clause 28. The electronic device according to clause 27, wherein:
the first base station receives a measurement report from the user equipment device, wherein the measurement report indicates that at least one of a signal quality between the user equipment device and the first base station or a signal quality between the user equipment device and the second base station does not meet a predefined condition;
the first base station transmits to the second base station a message indicating to stop the first handover; and
the first base station transmits to the user equipment device a message indicating to stop the first handover and to change the handover type to a user equipment device-initiated type.

Clause 29. The electronic device according to clause 27, wherein the message transmitted to the first base station comprises handover model parameters, wherein the handover model parameters comprise at least an identifier of the user equipment device, a set of handover times comprising the first time, an identifier of the first base station, and an identifier of the second base station.

Clause 30. The electronic device according to clause 29, wherein the processing circuit is further configured to cause the network function to perform following operations:
receiving handover data of the first handover from the first base station; and
generate new handover model parameters based at least on the handover data of the first handover.

Clause 31. The electronic device according to any of clauses 27 to 29, wherein:
in response to receiving a message indicating that the second base station has rejected the handover request, the first base station transmits to the user equipment device a message indicating to change the handover type to a user equipment device-initiated type.

Clause 32. The electronic device according to any of clauses 27 to 30, wherein the processing circuit is further configured to cause the network function to perform following operations:
receiving a handover requirement from the first base station, wherein a type of the handover requirement is configured as the base station-initiated type; and
transmitting the handover request message to the second base station.

Clause 33. The electronic device according to clause 32, wherein the processing circuit is further configured to cause the network function to perform following operations:
receiving an acknowledgement message for the handover request from the second base station; and
transmitting the handover command to the first base station.

Clause 34. The electronic device according to clause 29, wherein the user equipment device is of a location-fixed type, and the processing circuit is further configured to cause the network function to perform following operations:
prior to the first handover, transmitting to the first base station a message instructing the first base station to collect handover data for a set of location-fixed type user equipment devices comprising the user equipment device;
receiving from the first base station handover data of the first plurality of handovers of a user equipment device-initiated type, wherein the first plurality of handovers are performed by the first base station with user equipment devices in the set of location-fixed type user equipment devices and occur prior to the first handover; and
obtaining the handover model parameters based on the handover data of the first plurality of handovers.

Clause 35. The electronic device according to clause 29, wherein the processing circuit is further configured to cause the network function to perform following operations:
after transmitting the handover model parameters to the first base station, receive from the first base station handover data of a second plurality of handovers of a user equipment device-initiated type, wherein the second plurality of handovers occur prior to the first handover;
comparing the handover data of the second plurality of handovers with the handover model parameters; and
in response to determining that a proportion of handovers in the second plurality of handovers of which the handover data matches the handover model parameters exceeds a threshold, transmitting to the first base station a message indicating that a base station-initiated handover can begin, wherein the first base station transmits the handover request message to the second base station at least in response to receiving the message indicating that the base station-initiated handover can begin.

Clause 36. The electronic device according to clause 34 or 35, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

Clause 37. The electronic device according to clause 34, wherein, to obtain the handover model parameters, the processing circuit is further configured to cause the network function to perform following operations:
training a machine learning model using the handover data of the first plurality of handovers as training data; and
generating the handover model parameters by inputting the identifier of the user equipment device into the trained machine learning model.

Clause 38. An electronic device for a network function in a non-terrestrial network, wherein the non-terrestrial network further comprises a user equipment device capable of communicating with the network function, a base station, and a satellite, the electronic device comprising a processing circuit configured to cause the network function to perform following operations:
receiving from the base station a registration request message of the user equipment device,
wherein the registration request message comprises a location type bit indicating whether the user equipment device is of a location-fixed type or a location-mobile type;
registering the user equipment device based on the registration request message; and
transmitting to the base station an acknowledgement for the registration request message, wherein, in response to the location type bit indicating that the user equipment device is of the location-fixed type, the base station transmits a registration accept message to the user equipment device, and the registration accept message comprises information indicating that a handover type for the user equipment device is configured as base station-initiated.

Clause 39. The electronic device according to clause 38, wherein when the location type bit indicates that the user equipment device is of the location-fixed type, the registration request message further comprises a field indicating geographical location information of the user equipment device, and registering the user equipment device based on the registration request message further comprises registering the geographical location information of the user equipment device.

Clause 40. An electronic device for a second base station in a non-terrestrial network, wherein the non-terrestrial network further comprises a user equipment device capable of communicating with the second base station, a first base station, a network function, and a satellite, the electronic device comprising a processing circuit configured to cause the second base station to perform following operations:
receiving from the first base station a handover request message for a first handover of the user equipment device to the second base station, wherein the handover request message indicates that a handover type of the first handover is a base station-initiated type and the first handover is determined, to be initiated at a first time, by the first base station based on a message received from the network function; and
in response to determining that resources meet requirements for the first handover, transmitting to the first base station a message indicating that the second base station has accepted the handover request.

Clause 41. The electronic device according to clause 40, wherein the processing circuit is further configured to cause the second base station to perform following operations:
receiving from the first base station a message indicating to stop the first handover; and
releasing resources prepared for the first handover.

Clause 42. The electronic device according to clause 40,
wherein, in response to receiving the message indicating that the second base station has accepted the handover request, the first base station transmits a handover command to the user equipment device, wherein the handover command instructs the user equipment device to perform the first handover and indicates that the handover type of the first handover is the base station initiated type.

Clause 43. The electronic device according to clause 40, wherein the processing circuit is further configured to cause the second base station to perform following operations:
in response to determining that resources do not meet requirements for the first handover,
transmitting to the first base station a message indicating that the second base station has rejected the handover request,
wherein, in response to receiving the message indicating that the second base station has rejected the handover request, the first base station transmits to the user equipment device a message indicating that the handover type is changed to a user equipment device-initiated type.

Clause 44. The electronic device according to any of clauses 40 to 42, wherein the receiving from the first base station the handover request message comprises:
receiving the handover request message directly from the first base station, or
receiving the handover request message from the network function, wherein the handover request message is transmitted to the second base station by the network function in response to receiving a handover requirement transmitted by the first base station.

Clause 45. The electronic device according to any of clauses 40 to 42, wherein the transmitting to the first base station the message indicating that the second base station has accepted the handover request comprises:
transmitting an acknowledgement message for the handover request directly to the first base station, or
transmitting an acknowledgement message for the handover request to the network function, wherein the network function transmits a handover command to the first base station in response to receiving the acknowledgement message for the handover request from the second base station.

Clause 46. The electronic device according to any of clauses 40 to 42, wherein the message received by the first base station from the network function comprises handover model parameters, wherein the handover model parameters comprise at least an identifier of the user equipment device, a set of handover times comprising the first time, an identifier of the first base station, and an identifier of the second base station.

Clause 47. The electronic device according to clause 46, wherein the user equipment device is a location-fixed type user equipment device, and wherein:
prior to the first handover, the first base station receives from the network function a message instructing the first base station to collect handover data for a set of location-fixed type user equipment devices comprising the user equipment device;
the first base station performs a first plurality of handovers of the user equipment device-initiated type with user equipment devices in the set of location-fixed type user equipment devices;
the first base station transmits handover data of the first plurality of handovers to the network function, wherein the first plurality of handovers occur prior to the first handover,
wherein the handover model parameters are obtained by the network function based on the handover data of the first plurality of handovers.

Clause 48. The electronic device according to clause 46, wherein:
the first base station performs a second plurality of handovers of the user equipment device-initiated type with the user equipment device, after receiving the handover model parameters from the network function;
the first base station transmits handover data of the second plurality of handovers to the network function, wherein the second plurality of handovers occur before the first handover; and
the first base station receives from the network function a message indicating that a handover of the base station-initiated type can begin, wherein the first base station determines to initiate the first handover at the first time at least in response to receiving the message indicating that the handover of the base station-initiated type can begin.

Clause 49. The electronic device according to clause 47 or 48, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

Clause 50. The electronic device according to clause 47, wherein the handover model parameters are obtained by the network function through following operations:
training a machine learning model using the handover data of the first plurality of handovers as training data; and
generating the handover model parameters by inputting the identifier of the user equipment device into the trained machine learning model.

Clause 51. A method for a first base station in a non-terrestrial network, wherein the non-terrestrial network further comprises a user equipment device capable of communicating with the first base station, a second base station, a network function, and a satellite, the method comprising:
determining, based on a message received from the network function, that a first handover of the user equipment device to the second base station is to be initiated at a first time;
transmitting a handover request message to the second base station, wherein the handover request message indicates that a handover type of the first handover is a base station-initiated type; and
transmitting a handover command to the user equipment device, in response to receiving a message indicating that the second base station has accepted the handover request, wherein the handover command instructs the user equipment device to perform the first handover and indicates that the handover type of the first handover is a base station-initiated type.

Clause 52. A method for a base station in a non-terrestrial network, wherein the non-terrestrial network further comprises a user equipment device capable of communicating with the base station, a network function, and a satellite, the method comprising:
receiving a registration request message from the user equipment device, wherein the registration request message comprises a location type bit indicating whether the user equipment device is of a location-fixed type or a location-mobile type;
transmitting the registration request message to the network function; and
based on an acknowledgement for the registration request message received from the network function, transmitting a registration accept message to the user equipment device, wherein, in response to the location type bit indicating that the user equipment device is of the location-fixed type, the registration accept message comprises information indicating that a handover type for the user equipment device is configured as base station-initiated.

Clause 53. A method for a user equipment device in a non-terrestrial network, wherein the non-terrestrial network further comprises a first base station capable of communicating with the user equipment device, a second base station capable of communicating with the first base station, a network function, and a satellite, the method comprising:
receiving a handover command from the first base station, wherein the handover command instructs the user equipment device to perform a first handover to the second base station and indicates that a handover type of the first handover is a base station-initiated type;
performing signal quality measurements with the first base station and signal quality measurements with the second base station within a predetermined time period; and
performing the first handover in response to determining that, within the predetermined time period, a signal quality between the user equipment device and the first base station and a signal quality between the user equipment device and the second base station meet a predefined condition.

Clause 54. A method for a user equipment device in a non-terrestrial network, wherein the non-terrestrial network further comprises a base station capable of communicating with the user equipment device, a network function, and a satellite, the method comprising:
transmitting a registration request message to the base station, wherein the registration request message comprises a location type bit indicating whether the user equipment device is of a location-fixed type or a location-mobile type; and
receiving a registration accept message from the base station, wherein, in response to the location type bit indicating the user equipment device is of a location-fixed type, the registration accept message comprises information indicating that a handover type for the user equipment device is configured as base station-initiated.

Clause 55. A method for a network function in a non-terrestrial network, wherein the non-terrestrial network further comprises a user equipment device capable of communicating with the network function, a first base station, a second base station, and a satellite, the method comprising:
transmitting a message to the first base station, wherein the message comprises an indication to initiate, at a first time, a first handover of the user equipment device to the second base station,
wherein the first base station transmits a handover request message to the second base station, wherein the handover request message indicates that a handover type of the first handover is a base station-initiated type, and
wherein, in response to receiving a message indicating that the second base station has accepted the handover request, the first base station transmits a handover command to the user equipment device, wherein the handover command instructs the user equipment device to perform the first handover and indicates that the handover type of the first handover is a base station-initiated type.

Clause 56. A method for a network function in a non-terrestrial network, wherein the non-terrestrial network further comprises a user equipment device capable of communicating with the network function, a base station, and a satellite, the method comprising:
receiving from the base station a registration request message of the user equipment device, wherein the registration request message comprises a location type bit indicating whether the user equipment device is of a location-fixed type or a location-mobile type;
registering the user equipment device based on the registration request message; and
transmitting to the base station an acknowledgement for the registration request message, wherein, in response to the location type bit indicating that the user equipment device is of the location-fixed type, the base station transmits a registration accept message to the user equipment device, and the registration accept message comprises information indicating that a handover type for the user equipment device is configured as base station-initiated.

Clause 57. A method for a second base station in a non-terrestrial network, wherein the non-terrestrial network further comprises a user equipment device capable of communicating with the second base station, a first base station, a network function, and a satellite, the method comprising:
receiving from the first base station a handover request message for a first handover of the user equipment device to the second base station, wherein the handover request message indicates that a handover type of the first handover is a base station-initiated type and the first handover is determined, to be initiated at a first time, by the first base station based on a message received from the network function; and
in response to determining that resources meet requirements for the first handover, transmitting to the first base station a message indicating that the second base station has accepted the handover request.

Clause 58. A computer-readable storage medium having stored thereon one or more instructions which, when executed by one or more processors of an electronic device, cause the electronic device to perform the method according to any of clauses 51 to 57.

Clause 59. A computer program product comprising program instructions which, when executed by one or more processors of a computer, cause the computer to perform the method according to any of clauses 51 to 57.

It should be noted that the above application examples are merely illustrative. The embodiments of the present disclosure may be implemented in any other appropriate manner in the above examples, while still achieving the beneficial effects obtained by the embodiments of the present disclosure. Moreover, embodiments of the present disclosure may similarly be applied to other analogous application instances while still achieving the beneficial effects obtained by embodiments of the present disclosure.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated here. A machine-readable storage media and a program product for carrying or including the above-described machine-executable instructions also fall within the scope of the present disclosure. Such storage medium can include, but is not limited to, a floppy disk, an optical disk, a magneto-optical disk, a memory card, a memory stick, and the like.

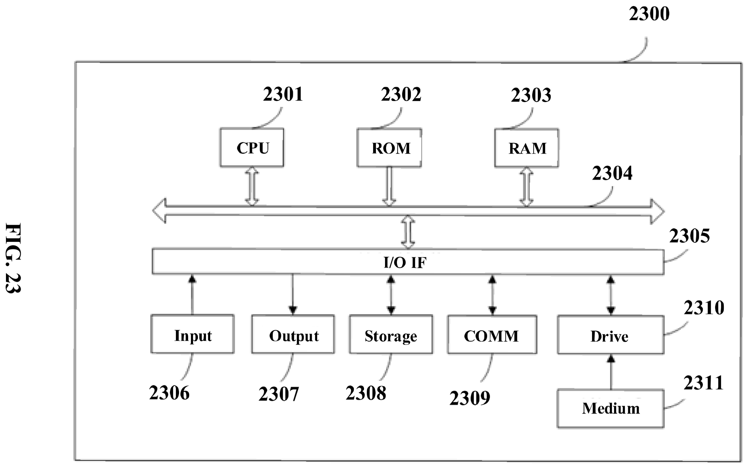

In addition, it should be understood that the above series of processing and devices can alternatively be implemented by software and/or firmware. In the case of implementation by software and/or firmware, a program constituting the software is installed from a storage medium or a network to a computer having a dedicated hardware configuration, such as a general-purpose personal computer 2300 shown in FIG. 23. When various programs are installed, the computer is capable of performing various functions and the like. FIG. 23 is a block diagram of an example structure of a personal computer as an information processing device that can be used in an embodiment of the present disclosure. In an example, the personal computer can correspond to the foregoing exemplary terminal device according to the present disclosure.

In FIG. 23, a central processing unit (CPU) 2301 executes various processing based on a program stored in a read-only memory (ROM) 2302 or a program loaded from a storage portion 2308 to a random access memory (RAM) 2303. The RAM 2303 also stores data required for executing various processing and the like by the CPU 2301 when necessary.

The CPU 2301, the ROM 2302, and the RAM 2303 are connected with each other via a bus 2304. An input/output port 2305 is also connected to the bus 2304.

The following components are connected to the input/output port 2305: an input part 2306, including a keyboard, a mouse, and the like; an output part 2307, including a display such as a cathode-ray tube (CRT) and a liquid crystal display (LCD), a speaker, and the like; a storage part 2308, including a hard disk and the like; and a communication part 2309, including a network interface card such as a LAN card or a modem. The communication part 2309 performs communication processing via a network such as the Internet.

Based on needs, a drive 2310 is also connected to the input/output port 2305. A removable medium 2311 such as a magnetic disk, an optical disk, a magneto-optical disk, a semiconductor memory, or the like is mounted on the drive 2310 when necessary, so that a computer program read therefrom is installed in the storage part 2308 when necessary.

In a case that the foregoing series of processing are implemented by software, programs constituting the software are installed from a network such as the Internet or a storage medium such as the removable medium 2311.

Those skilled in the art should understand that such a storage medium is not limited to the removable medium 2311 shown in FIG. 23, in which the program is stored and distributed independent from a device to provide the program for users. For example, the removable medium 2311 includes a magnetic disk (including a floppy disk (registered trademark)), an optical disc (including a compact disk read-only memory (CD-ROM) and a digital versatile disk (DVD)), a magneto-optical disc (including a mini disk (MD) (registered trademark)), and a semiconductor memory. Alternatively, the storage medium can be the ROM 2302, a hard disk included in the storage part 2308, or the like, in which the program is stored, and can be distributed to users along with a device including the storage medium.

The technology of the present disclosure may be applied to various products.

For example, electronic devices 300 and 500 according to embodiments of the present disclosure may be implemented as various base stations or incorporated in various base stations, and the methods shown in FIGS. 4 and 6 may also be implemented by various base stations. For example, electronic devices 700 and 1000 according to embodiments of the present disclosure may be implemented as various user equipment device/terminal devices or incorporated in various user equipment device/terminal devices, and the methods illustrated in FIGS. 8 and 10 may likewise be implemented by various user equipment device/terminal devices.

For example, the network device/base stations mentioned herein may be implemented as any type of base stations, such as an evolved Node B (gNB). A gNB may include one or more transmit and receive points (TRPs). User equipment device may be connected to one or more TRPs within one or more gNBs. For example, user equipment device may be capable of receiving transmissions from multiple gNBs (and/or multiple TRPs provided by the same gNB). For example, the gNB may include macro gNBs and small gNBs. The small gNB can be a gNB covering a cell smaller than the macro cell, such as a pico gNB, a micro gNB, and a home (femto) gNB. Alternatively, the base station can be implemented as any other type of base station, such as a NodeB and a Base Transceiver Station (BTS). The base station can include: a body (also referred to as a base station device) configured to control radio communication; and one or more remote radio heads (RRHs) disposed at a different location from the body. In addition, various types of terminals which will be described below can each operate as a base station by performing base station functions temporarily or semi-persistently.

For example, the user equipment device mentioned in the present disclosure, also referred to as terminal device in some examples, can be implemented as a mobile terminal (such as a smartphone, a tablet personal computer (PC), a notebook PC, a portable game terminal, a portable/dongle type mobile router and digital camera) or in-vehicle terminal (such as car navigation device). The user equipment device can also be implemented as a terminal that performs machine-to-machine (M2M) communication (also referred to as a machine type communication (MTC) terminal). Further, the user equipment device can be a radio communication module (such as an integrated circuit module including a single wafer) installed on each of the above terminals. In some instances, a user equipment device may communicate using multiple wireless communication technologies. For example, a user equipment device may be configured to communicate using two or more of GSM, UMTS, CDMA2000, WiMAX, LTE, LTE-A, WLAN, NR, Bluetooth, etc. In some instances, a user equipment device may also be configured to communicate using only one wireless communication technology.

### Use Cases of Base Stations

It should be understood that the term base station in the present disclosure encompasses its full conventional meaning and includes, at least, a wireless communication station employed as part of a wireless communication system or radio system for facilitating communication. Examples of base stations may include, but are not limited to: one or more of a base transceiver station (BTS) and a base station controller (BSC) in a GSM system; one or more of a radio network controller (RNC) and a Node B in a WCDMA system; an eNB in a LTE and LTE-Advanced system; and corresponding network nodes in any communication system to be developed or being developed (e.g., a gNB, eLTE eNB, etc., potentially appearing in 5G communication systems). Some functions of the base station disclosed herein can alternatively be implemented as an entity that has a control function on communication in a scenario of D2D, M2M, and V2V, or as an entity that performs spectrum coordination in a cognitive radio communication scenario.

### First use case

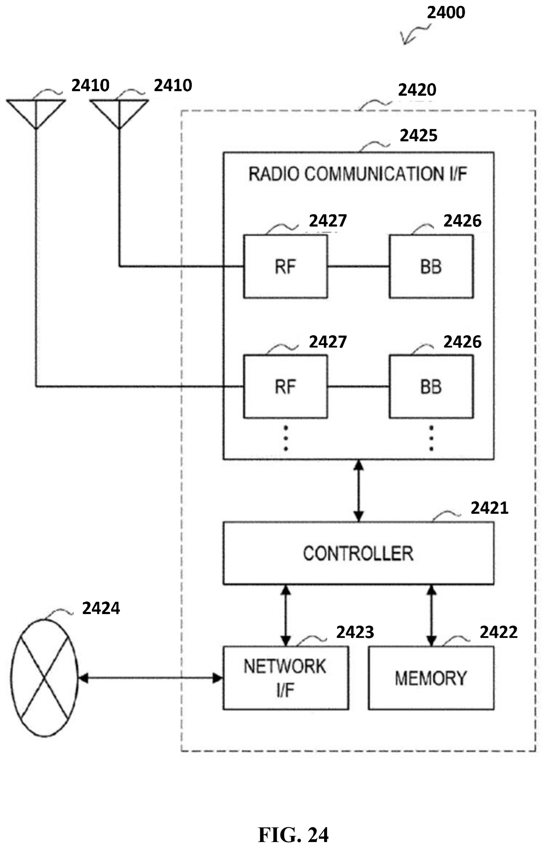

FIG. 24 is a block diagram illustrating a first example of a schematic configuration of a base station (with a gNB as an example in the figure) to implement the technology of the present disclosure. The gNB 2400 includes a plurality of antennas 2410 and a base station device 2420. The base station device 2420 and each antenna 2410 can be connected to each other via an RF cable. In one implementation, the gNB 2400 (or base station device 2420) herein can correspond to the network device described above (in particular, the electronic device 300 or 500).

Each of the antennas 2410 includes a single or multiple antenna elements (such as multiple antenna elements included in a multiple input and multiple output (MIMO) antenna), and is used for the base station device 2420 to transmit and receive radio signals. As shown in FIG. 24, the gNB 2400 can include multiple antennas 2410. For example, multiple antennas 2410 can be compatible with multiple frequency bands used by the gNB 2400.

The base station device 2420 includes a controller 2421, a memory 2422, a network interface 2423, and a radio communication interface 2425.

The controller 2421 can be, for example, a CPU or a DSP, and operates various functions of higher layers of the base station device 2420. For example, controller 2421 generates data packets from data in signals processed by the radio communication interface 2425, and transfers the generated packets via the network interface 2423. The controller 2421 can bundle data from multiple baseband processors to generate the bundled packets, and transfer the generated bundled packets. The controller 2421 can have logic functions of performing control such as radio resource control, radio bearer control, mobility management, admission control, and scheduling. This control can be performed in corporation with a gNB or a core network node in the vicinity. The memory 2422 includes a RAM and a ROM, and stores a program that is executed by the controller 2421 and various types of control data (such as a terminal list, transmission power data, and scheduling data).

The network interface 2423 is a communication interface for connecting the base station device 2420 to the core network 2424. The controller 2421 can communicate with a core network node or another gNB via the network interface 2423. In this case, the gNB 2400 and the core network node or other gNBs can be connected to each other through a logical interface (such as an S1 interface and an X2 interface). The network interface 2423 can also be a wired communication interface or a radio communication interface for radio backhaul lines. If the network interface 2423 is a radio communication interface, the network interface 2423 can use a higher frequency band for radio communication than a frequency band used by the radio communication interface 2425.

The radio communication interface 2425 supports any cellular communication schemes (such as Long Term Evolution (LTE) and LTE-Advanced), and provides, via the antenna 2410, radio connection to a terminal located in a cell of the gNB 2400. The radio communication interface 2425 can typically include, for example, a baseband (BB) processor 2426 and a RF circuit 2427. The BB processor 2426 can perform, for example, encoding/decoding, modulation/demodulation, and multiplexing/demultiplexing, and performs various types of signal processing of layers (such as L1, Medium Access Control (MAC), Radio Link Control (RLC), and Packet Data Convergence Protocol (PDCP)). Instead of the controller 2421, the BB processor 2426 can have a part or all of the above-described logic functions. The BB processor 2426 can be a memory that stores a communication control program, or a module that includes a processor configured to execute the program and a related circuit. Updating the program can allow the functions of the BB processor 2426 to be changed. The module can be a card or a blade that is inserted into a slot of the base station device 2420. Alternatively, the module can also be a chip that is mounted on the card or the blade. Meanwhile, the RF circuit 2427 can include, for example, a mixer, a filter, and an amplifier, and transmits and receives radio signals via the antenna 2410. Although FIG. 24 illustrates the example in which one RF circuit 2427 is connected to one antenna 2410, the present disclosure is not limited to thereto; rather, one RF circuit 2427 can connect to a plurality of antennas 2410 at the same time.

As illustrated in FIG. 24, the radio communication interface 2425 can include the multiple BB processors 2426. For example, the multiple BB processors 2426 can be compatible with multiple frequency bands used by gNB 2400. As illustrated in FIG. 24, the radio communication interface 2425 can include the multiple RF circuits 2427. For example, the multiple RF circuits 2427 can be compatible with multiple antenna elements. Although FIG. 24 illustrates the example in which the radio communication interface 2425 includes the multiple BB processors 2426 and the multiple RF circuits 2427, the radio communication interface 2425 can also include a single BB processor 2426 or a single RF circuit 2427.

### Second use case

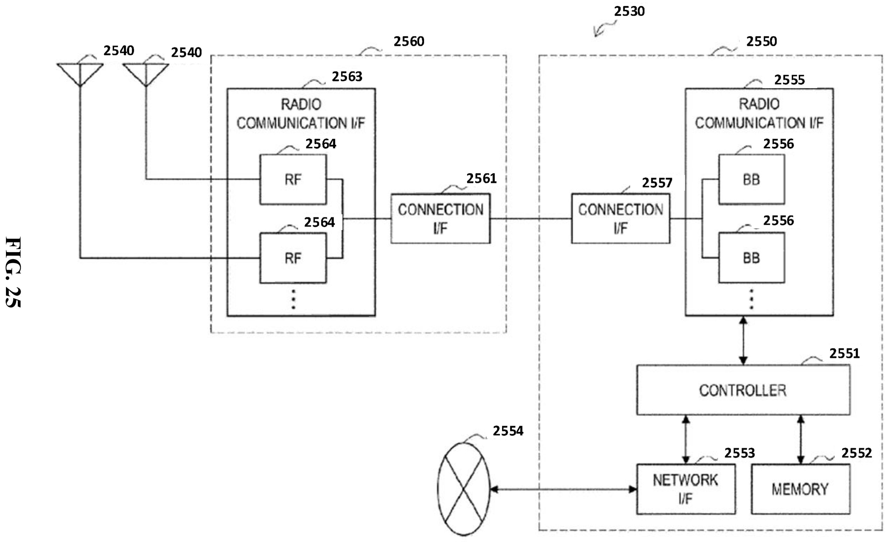

FIG. 25 is a block diagram illustrating a second example of a schematic configuration of a base station (with a gNB as an example in the figure) to implement the technology of the present disclosure. The gNB 2530 includes a plurality of antennas 2540, a base station device 2550, and an RRH 2560. The RRH 2560 and each antenna 2540 can be connected to each other via an RF cable. The base station device 2550 and the RRH 2560 can be connected to each other via a high speed line such as a fiber optic cable. In one implementation, the gNB 2530 (or base station device 2550) herein can correspond to the base station described above (in particular, the electronic device 300 or 500).

Each of the antennas 2540 includes a single or multiple antenna elements such as multiple antenna elements included in a MIMO antenna and is used for the RRH 2560 to transmit and receive radio signals. As shown in FIG. 25, the gNB 2530 can include multiple antennas 2540. For example, multiple antennas 2540 can be compatible with multiple frequency bands used by the gNB 2530.

The base station device 2550 includes a controller 2551, a memory 2552, a network interface 2553, a radio communication interface 2555, and a connection interface 2557. The controller 2551, the memory 2552, and the network interface 2553 are the same as the controller 2421, the memory 2422, and the network interface 2423 described with reference to FIG. 24.

The radio communication interface 2555 supports any cellular communication scheme (such as LTE and LTE-Advanced) and provides radio communication to terminals positioned in a sector corresponding to the RRH 2560 via the RRH 2560 and the antenna 2540. The radio communication interface 2555 can typically include, for example, a BB processor 2556. The BB processor 2556 is the same as the BB processor 2426 described with reference to FIG. 24, except that the BB processor 2556 is connected to the RF circuit 2564 of the RRH 2560 via the connection interface 2557. As illustrated in FIG. 25, the radio communication interface 2555 can include the multiple BB processors 2556. For example, the multiple BB processors 2556 can be compatible with multiple frequency bands used by gNB 2530. Although FIG. 25 illustrates the example in which the radio communication interface 2555 includes multiple BB processors 2556, the radio communication interface 2555 can also include a single BB processor 2556.

The connection interface 2557 is an interface for connecting the base station device 2550 (radio communication interface 2555) to the RRH 2560. The connection interface 2557 can also be a communication module for communication in the above-described high speed line that connects the base station device 2550 (radio communication interface 2555) to the RRH 2560.

The RRH 2560 includes a connection interface 2561 and a radio communication interface 2563.

The connection interface 2561 is an interface for connecting the RRH 2560 (radio communication interface 2563) to the base station device 2550. The connection interface 2561 can also be a communication module for communication in the above-described high speed line.

The radio communication interface 2563 transmits and receives radio signals via the antenna 2540. The radio communication interface 2563 can typically include, for example, the RF circuitry 2564. The RF circuit 2564 can include, for example, a mixer, a filter, and an amplifier, and transmits and receives radio signals via the antenna 2540. Although FIG. 25 illustrates the example in which one RF circuit 2564 is connected to one antenna 2540, the present disclosure is not limited to thereto; rather, one RF circuit 2564 can connect to a plurality of antennas 2540 at the same time.

As illustrated in FIG. 25, the radio communication interface 2563 can include the multiple RF circuits 2564. For example, the multiple RF circuits 2564 can support multiple antenna elements. Although FIG. 25 illustrates the example in which the radio communication interface 2563 includes the multiple RF circuits 2564, the radio communication interface 2563 can also include a single RF circuit 2564.

### Use Cases for User Equipment Devices

### First use case

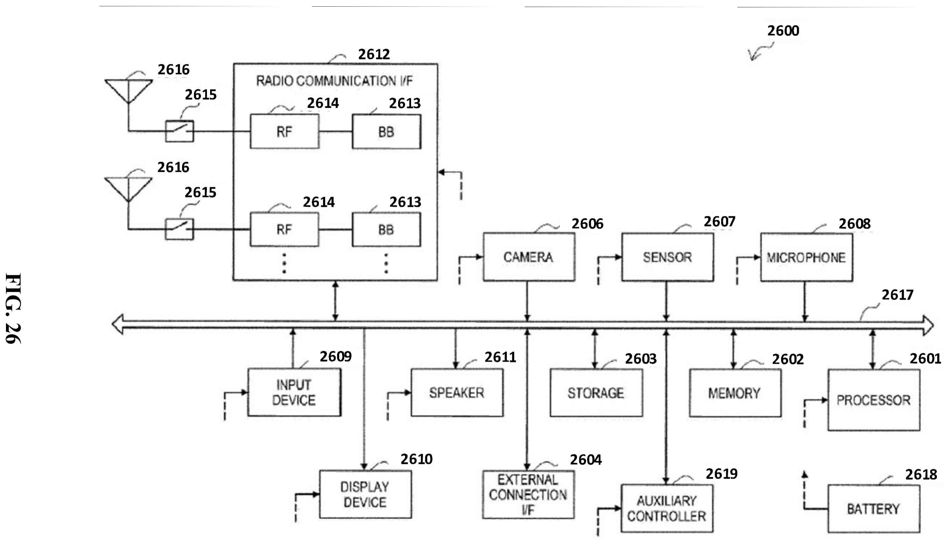

FIG. 26 is a block diagram illustrating an example of a schematic configuration of a smartphone 2600 to implement the technology of the present disclosure. A smartphone 2600 includes a processor 2601, a memory 2602, a storage device 2603, an external connection interface 2604, a camera device 2606, a sensor 2607, a microphone 2608, an input device 2609, a display device 2610, a speaker 2611, a radio communication interface 2612, one or more antenna switches 2615, one or more antennas 2616, a bus 2617, a battery 2618, and an auxiliary controller 2619. In an implementation, the smartphone 2600 (or the processor 2601) herein can correspond to the user device described above (in particular, the electronic device 700 or 900).

The processor 2601 can be, for example, a CPU or a system on a chip (SoC), and controls functions of the application layer and other layers of the smartphone 2600. The memory 2602 includes a RAM and a ROM, and stores a program that is executed by the processor 2601. The storage device 2603 can include a storage medium such as a semiconductor memory and a hard disk. The external connection interface 2604 is an interface for connecting an external device (for example, a memory card and a universal serial bus (USB) device) to the smartphone 2600.

The camera device 2606 includes an image sensor (for example, a charge coupled device (CCD) and a complementary metal oxide semiconductor (CMOS)), and generates a captured image. The sensor 2607 can include a set of sensors, such as a measurement sensor, a gyro sensor, a geomagnetic sensor, and an acceleration sensor. The microphone 2608 converts the sound input of the smart phone 2600 into an audio signal. The input device 2609 includes, for example, a touch sensor configured to detect touches on the screen of the display device 2610, a keypad, a keyboard, buttons, or switches, and receives input operations or information of a user. The display device 2610 includes a screen (for example, a liquid crystal display (LCD) and an organic light emitting diode (OLED) display), and displays output images of the smartphone 2600. The speaker 2611 converts output audio signals of the smartphone 2600 into sound.

The radio communication interface 2612 supports any cellular communication scheme (such as LTE, LTE-Advanced, and NR) and performs radio communication. The radio communication interface 2612 can typically include, for example, a BB processor 2613 and an RF circuit 2614. The BB processor 2613 can perform, for example, encoding/decoding, modulation/demodulation, and multiplexing/demultiplexing, and performs various types of signal processing for radio communication. Meanwhile, the RF circuit 2614 can include, for example, a mixer, a filter, and an amplifier, and transmits and receives radio signals via the antenna 2616. The radio communication interface 2612 can be a chip module on which the BB processor 2613 and the RF circuit 2614 are integrated. As shown in FIG. 26, the radio communication interface 2612 can include multiple BB processors 2613 and multiple RF circuits 2614. Although FIG. 26 illustrates the example in which the radio communication interface 2612 includes the multiple BB processors 2613 and the multiple RF circuits 2614, the radio communication interface 2612 can also include a single BB processor 2613 or a single RF circuit 2614.

In addition to a cellular communication scheme, the radio communication interface 2612 can support other types of radio communication schemes, such as a short-range wireless communication scheme, a near-field communication scheme, and a wireless local area network (LAN) scheme. In this case, the radio communication interface 2612 can include the BB processor 2613 and the RF circuit 2614 as to each radio communication scheme.

Each of the antenna switches 2615 switches the connection destination of the antenna 2616 among multiple circuits (for example, circuits for different radio communication schemes) included in the radio communication interface 2612.

Each of the antennas 2616 includes one or more antenna elements (such as multiple antenna elements included in a MIMO antenna), and is used for the radio communication interface 2612 to transmit and receive radio signals. As shown in FIG. 26, the smartphone 2600 can include multiple antennas 2616. Although FIG. 26 illustrates an example in which the smartphone 2600 includes multiple antennas 2616, the radio communication interface 2600 can alternatively include a single antenna 2616.

In addition, the smartphone 2600 can include the antennas 2616 for each radio communication scheme. In this case, the antenna switch 2615 can be removed from configuration of the smartphone 2600.

The bus 2617 connects the processor 2601, the memory 2602, the storage device 2603, the external connection interface 2604, the camera device 2606, the sensor 2607, the microphone 2608, the input device 2609, the display device 2610, the speaker 2611, the radio communication interface 2612, and the auxiliary controller 2619. The battery 2618 provides power for various blocks of the smartphone 2600 illustrated in FIG. 26 via feeders, and the feeders are partially expressed as dashed lines in the figure. The auxiliary controller 2619, for example, operates the minimum necessary functions of the smartphone 2600 in sleep mode.

### Second use case

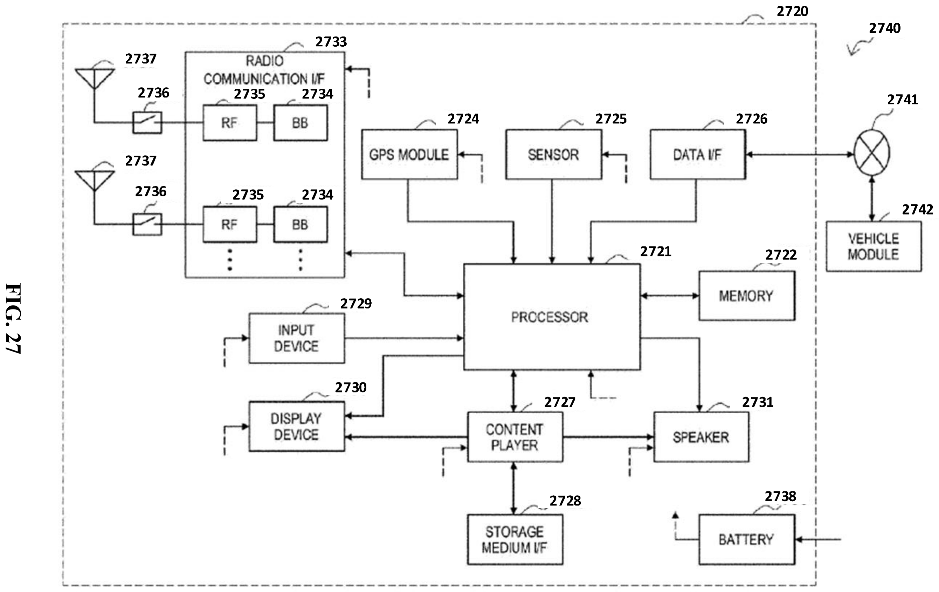

FIG. 27 is a block diagram illustrating an example of a schematic configuration of a car navigation device 2720 to implement the technology of the present disclosure. The car navigation device 2720 includes a processor 2721, a memory 2722, a global positioning system (GPS) 2724, a sensor 2725, a data interface 2726, a content player 2727, a storage medium interface 2728, an input device 2729, a display device 2730, a speaker 2731, a radio communication interface 2733, one or more antenna switches 2736, one or more antennas 2737, and a battery 2738. In an implementation, the car navigation device 2720 (or the processor 2721) herein can correspond to the above-described terminal device 700 and/or 900.

The processor 2721 can be, for example, a CPU or a SoC, and controls the navigation function and other functions of the car navigation device 2720. The memory 2722 includes a RAM and a ROM, and stores a program that is executed by the processor 2721.

The GPS module 2724 performs measurement on a location (such as a latitude, a longitude, and an altitude) of the car navigation device 2720 by using GPS signals received from GPS satellites. The sensor 2725 can include a set of sensors, such as a gyro sensor, a geomagnetic sensor, and an air pressure sensor. The data interface 2726 is connected to, for example, an in-vehicle network 2741 via a terminal not shown, and acquires data generated by the vehicle (such as vehicle speed data).

The content player 2727 plays back content stored in a storage medium (such as a CD and a DVD), which is inserted into the storage medium interface 2728. The input device 2729 includes, for example, a touch sensor configured to detect touches on the screen of the display device 2730, buttons, or switches, and receives input operations or information of a user. The display device 2730 includes a screen, for example, an LCD or OLED screen, and displays images for the navigation function or playback content. The speaker 2731 outputs the sound for the navigation function or playback content.

The radio communication interface 2733 supports any cellular communication scheme (such as LTE, LTE-Advanced, and NR) and performs radio communication. The radio communication interface 2733 can typically include, for example, a BB processor 2734 and an RF circuit 2735. The BB processor 2734 can perform, for example, encoding/decoding, modulation/demodulation, and multiplexing/demultiplexing, and performs various types of signal processing for radio communication. Meanwhile, the RF circuit 2735 can include, for example, a mixer, a filter, and an amplifier, and transmits and receives radio signals via the antenna 2737. The radio communication interface 2733 can alternatively be a chip module on which the BB processor 2734 and the RF circuit 2735 are integrated. As shown in FIG. 27, the radio communication interface 2733 can include multiple BB processors 2734 and multiple RF circuits 2735. Although FIG. 27 illustrates the example in which the radio communication interface 2733 includes the multiple BB processors 2734 and the multiple RF circuits 2735, the radio communication interface 2733 can also include a single BB processor 2734 or a single RF circuit 2735.

In addition to a cellular communication scheme, the radio communication interface 2733 can support other types of radio communication schemes, such as a short-range wireless communication scheme, a near-field communication scheme, and a wireless LAN scheme. In this case, the radio communication interface 2733 can include the BB processor 2734 and the RF circuit 2735 as to each radio communication scheme.

Each of the antenna switches 2736 switches the connection destination of the antenna 2737 among multiple circuits (for example, circuits for different radio communication schemes) included in the radio communication interface 2733.

Each of the antennas 2737 includes one or more antenna elements (such as multiple antenna elements included in a MIMO antenna), and is used for the radio communication interface 2733 to transmit and receive radio signals. As shown in FIG. 27, the car navigation device 2720 can include multiple antennas 2737. Although FIG. 27 illustrates an example in which the car navigation device 2720 includes multiple antennas 2737, the car navigation device 2720 can alternatively include a single antenna 2737.

In addition, the car navigation device 2720 can include the antenna 2737 for each radio communication scheme. In this case, the antenna switch 2736 can be removed from configuration of the car navigation device 2720.

The battery 2738 provides power for various blocks of the car navigation device 2720 illustrated in FIG. 27 via feeders, and the feeders are partially expressed as dashed lines in the figure. The battery 2738 accumulates power supplied by the vehicle.

The technology of the present disclosure can also be implemented as an in-vehicle system (or vehicle) 2740 including one or more blocks of the car navigation device 2720, the in-vehicle network 2741, and a vehicle module 2742.The vehicle module 2742 generates vehicle data (such as vehicle speed, engine speed, and failure information), and outputs the generated data to the in-vehicle network 2741.

The exemplary embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, a plurality of functions included in one unit in the above embodiments can be implemented by separate devices. Alternatively, the multiple functions implemented by the multiple units in the above embodiments can be implemented by separate devices, respectively. In addition, one of the above functions can be realized by multiple units. Needless to say, such a configuration is included in the technical scope of the present disclosure.

In this specification, the steps described in the flowchart include not only processes performed in time series in the described order, but also processes performed in parallel or individually rather than necessarily in time series. In addition, even in the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include" and "comprise", or any of their variants in the embodiments of the present disclosure are intended to cover a non-exclusive inclusion, so that a process, method, article, or device that includes a list of elements not only includes those elements but also includes other elements that are not expressly listed, or further includes elements inherent to such process, method, article, or device. In absence of more constraints, an element preceded by "includes a.." does not preclude existence of other identical elements in the process, method, article, or device that includes the element.

## Claims

1. An electronic device for a first base station in a non-terrestrial network, wherein the non-terrestrial network further comprises a user equipment device capable of communicating with the first base station, a second base station, a network function, and a satellite, the electronic device comprising a processing circuit configured to cause the first base station to perform following operations:
determining, based on a message received from the network function, that a first handover of the user equipment device to the second base station is to be initiated at a first time;
transmitting a handover request message to the second base station, wherein the handover request message indicates that a handover type of the first handover is a base station-initiated type; and
transmitting a handover command to the user equipment device, in response to receiving a message indicating that the second base station has accepted the handover request, wherein the handover command instructs the user equipment device to perform the first handover and indicates that the handover type of the first handover is the base station-initiated type.

2. The electronic device according to claim 1, wherein the processing circuit is further configured to cause the first base station to perform following operations:
receiving a measurement report from the user equipment device, wherein the measurement report indicates that at least one of a signal quality between the user equipment device and the first base station or a signal quality between the user equipment device and the second base station does not meet a predefined condition;
transmitting to the second base station a message indicating to stop the first handover; and
transmitting to the user equipment device a message indicating to stop the first handover and to change the handover type to a user equipment device-initiated type.

3. The electronic device according to claim 1, wherein the processing circuit is further configured to cause the first base station to perform following operations:
after completion of the first handover, transmitting handover data of the first handover to the network function.

4. The electronic device according to any of claims 1 to 3, wherein the processing circuit is further configured to cause the first base station to perform following operations:
transmitting to the user equipment device a message indicating to change the handover type to a user equipment device-initiated type, in response to receiving a message indicating that the second base station has rejected the handover request.

5. The electronic device according to any of claims 1 to 3, wherein transmitting the handover request message to the second base station comprises:
transmitting the handover request message directly to the second base station, or
transmitting a handover requirement to the network function, wherein a type of the handover requirement is configured as the base station-initiated type, and wherein the handover request message is transmitted to the second base station by the network function in response to receiving the handover requirement.

6. The electronic device according to any of claims 1 to 3, wherein the message indicating that the second base station has accepted the handover request is an acknowledgement message for the handover request received from the second base station or a handover command received from the network function.

7. The electronic device according to any of claims 1 to 3, wherein the message received from the network function comprises handover model parameters, wherein the handover model parameters comprise at least an identifier of the user equipment device, a set of handover times comprising the first time, an identifier of the first base station, and an identifier of the second base station.

8. The electronic device according to claim 7, wherein the user equipment device is a location-fixed type user equipment device, and the processing circuit is further configured to cause the first base station to perform following operations:
prior to the first handover, receiving from the network function a message instructing the first base station to collect handover data for a set of location-fixed type user equipment devices comprising the user equipment device;
performing a first plurality of handovers of user equipment device-initiated type with user equipment devices in the set of location-fixed type user equipment devices; and
transmitting handover data of the first plurality of handovers to the network function, wherein the first plurality of handovers occur prior to the first handover,
wherein the handover model parameters are obtained by the network function based on the handover data of the first plurality of handovers.

9. The electronic device according to claim 7, wherein the processing circuit is further configured to cause the first base station to perform following operations:
after receiving the handover model parameters from the network function, performing a second plurality of handovers of user equipment device-initiated type with the user equipment device;
transmitting handover data of the second plurality of handovers to the network function, wherein the second plurality of handovers occur prior to the first handover; and
receiving from the network function a message indicating that a handover of base station-initiated type can begin, wherein determining to initiate the first handover of the user equipment device to the second base station at the first time is performed at least in response to receiving the message indicating that the handover of base station-initiated type can begin.

10. The electronic device according to claim 8 or 9, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

11. The electronic device according to claim 8, wherein the handover model parameters are obtained by the network function through following operations:
training a machine learning model using the handover data of the first plurality of handovers as training data; and
generating the handover model parameters by inputting the identifier of the user equipment device into the trained machine learning model.

12. An electronic device for a base station in a non-terrestrial network, wherein the non-terrestrial network further comprises a user equipment device capable of communicating with the base station, a network function, and a satellite, the electronic device comprising a processing circuit configured to cause the base station to perform following operations:
receiving a registration request message from the user equipment device, wherein the registration request message comprises a location type bit indicating whether the user equipment device is of a location-fixed type or a location-mobile type;
transmitting the registration request message to the network function; and
based on an acknowledgement for the registration request message received from the network function, transmitting a registration accept message to the user equipment device, wherein, in response to the location type bit indicating that the user equipment device is of the location-fixed type, the registration accept message comprises information indicating that a handover type for the user equipment device is configured as base station-initiated.

13. The electronic device according to claim 12, wherein when the location type bit indicates that the user equipment device is of the location-fixed type, the registration request message further comprises a field indicating geographical location information of the user equipment device.

14. An electronic device for a user equipment device in a non-terrestrial network, wherein the non-terrestrial network further comprises a first base station capable of communicating with the user equipment device, a second base station capable of communicating with the first base station, a network function, and a satellite, the electronic device comprising a processing circuit configured to cause the user equipment device to perform following operations:
receiving a handover command from the first base station, wherein the handover command instructs the user equipment device to perform a first handover to the second base station and indicates that a handover type of the first handover is a base station-initiated type;
performing signal quality measurements with the first base station and signal quality measurements with the second base station within a predetermined time period; and
performing the first handover in response to determining that, within the predetermined time period, a signal quality between the user equipment device and the first base station and a signal quality between the user equipment device and the second base station meet a predefined condition.

15. The electronic device according to claim 14, wherein:
the first base station determines to initiate the first handover at a first time based on a message received from the network function;
the first base station transmits a handover request message to the second base station, wherein the handover request message indicates that the handover type of the first handover is the base station-initiated type; and
the handover command is transmitted by the first base station to the user equipment device in response to receiving a message indicating that the second base station has accepted the handover request.

16. The electronic device according to claim 14 or 15, wherein the processing circuit is further configured to cause the user equipment device to perform following operations:
in response to determining that, within the predetermined time period, at least one of the signal quality between the user equipment device and the first base station or the signal quality between the user equipment device and the second base station does not meet the predefined condition:
transmitting a measurement report to the first base station;
receiving from the first base station a message indicating to stop the first handover and to change the handover type to a user equipment device-initiated type; and
performing signal quality measurements with the first base station and signal quality measurements with one or more base stations comprising the second base station.

17. The electronic device according to claim 15, wherein the processing circuit is further configured to cause the user equipment device to perform following operations:
receive from the first base station a message indicating to change the handover type to a user equipment device-initiated type, wherein the message is transmitted to the user equipment device by the first base station in response to receiving a message indicating that the second base station has rejected the handover request.

18. The electronic device according to claim 15, wherein the first base station transmitting the handover request message to the second base station comprises:
the first base station transmitting the handover request message directly to the second base station, or
the first base station transmitting a handover requirement to the network function, wherein a type of the handover requirement is configured as the base station-initiated type, and wherein the handover request message is transmitted to the second base station by the network function in response to receiving the handover requirement.

19. The electronic device according to claim 15, wherein the message indicating that the second base station has accepted the handover request is an acknowledgement message for the handover request received by the first base station from the second base station, or a handover command received by the first base station from the network function.

20. The electronic device according to claim 15, wherein the message received by the first base station from the network function comprises handover model parameters, wherein the handover model parameters comprise at least an identifier of the user equipment device, a set of handover times comprising the first time, an identifier of the first base station, and an identifier of the second base station.

21. The electronic device according to claim 20, wherein the user equipment device is of a location-fixed type, and wherein:
prior to the first handover, the first base station receives from the network function a message instructing the first base station to collect handover data for a set of location-fixed type user equipment devices comprising the user equipment device;
the first base station performs a first plurality of handovers of user equipment device-initiated type with user equipment devices in the set of location-fixed type user equipment devices;
the first base station transmits to the network function handover data of the first plurality of handovers, wherein the first plurality of handovers occurs prior to the first handover; and
the handover model parameters are obtained by the network function based on the handover data of the first plurality of handovers.

22. The electronic device according to claim 20, wherein:
after receiving the handover model parameters from the network function, the first base station performs a second plurality of handovers of user-initiated type with the user equipment device;
the first base station transmits handover data of the first plurality of handovers to the network function, wherein the second plurality of handovers occur prior to the first handover;
the first base station receives from the network function a message indicating that a handover of the base station-initiated type can begin, wherein determining to initiate the first handover of the user equipment device to the second base station at the first time is performed at least in response to receiving the message indicating that the handover of the base station-initiated type can begin.

23. The electronic device according to claim 21 or 22, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

24. The electronic device according to claim 21, wherein the handover model parameters are obtained by the network function through following operations:
training a machine learning model using the handover data of the first plurality of handovers as training data; and
generating the handover model parameters by inputting the identifier of the user equipment device into the trained machine learning model.

25. An electronic device for a user equipment device in a non-terrestrial network, wherein the non-terrestrial network further comprises a base station capable of communicating with the user equipment device, a network function, and a satellite, the electronic device comprising a processing circuit configured to cause the user equipment device to perform following operations:
transmitting a registration request message to the base station, wherein the registration request message comprises a location type bit indicating whether the user equipment device is of a location-fixed type or a location-mobile type; and
receiving a registration accept message from the base station, wherein, in response to the location type bit indicating the user equipment device is of the location-fixed type, the registration accept message comprises information indicating that a handover type for the user equipment device is configured as base station-initiated.

26. The electronic device according to claim 25, wherein when the location type bit indicates that the user equipment device is of the location-fixed type, the registration request message further comprises a field indicating geographical location information of the user equipment device.

27. An electronic device for a network function in a non-terrestrial network, wherein the non-terrestrial network further comprises a user equipment device capable of communicating with the network function, a first base station, a second base station, and a satellite, the electronic device comprising a processing circuit configured to cause the network function to perform following operations:
transmitting a message to the first base station, wherein the message comprises an indication to initiate, at a first time, a first handover of the user equipment device to the second base station,
wherein the first base station transmits a handover request message to the second base station, wherein the handover request message indicates that a handover type of the first handover is a base station-initiated type, and
wherein, in response to receiving a message indicating that the second base station has accepted the handover request, the first base station transmits a handover command to the user equipment device, wherein the handover command instructs the user equipment device to perform the first handover and indicates that the handover type of the first handover is the base station-initiated type.

28. The electronic device according to claim 27, wherein:
the first base station receives a measurement report from the user equipment device, wherein the measurement report indicates that at least one of a signal quality between the user equipment device and the first base station or a signal quality between the user equipment device and the second base station does not meet a predefined condition;
the first base station transmits to the second base station a message indicating to stop the first handover; and
the first base station transmits to the user equipment device a message indicating to stop the first handover and to change the handover type to a user equipment device-initiated type.

29. The electronic device according to claim 27, wherein the message transmitted to the first base station comprises handover model parameters, wherein the handover model parameters comprise at least an identifier of the user equipment device, a set of handover times comprising the first time, an identifier of the first base station, and an identifier of the second base station.

30. The electronic device according to claim 29, wherein the processing circuit is further configured to cause the network function to perform following operations:
receiving handover data of the first handover from the first base station; and
generate new handover model parameters based at least on the handover data of the first handover.

31. The electronic device according to any of claims 27 to 29, wherein:
in response to receiving a message indicating that the second base station has rejected the handover request, the first base station transmits to the user equipment device a message indicating to change the handover type to a user equipment device-initiated type.

32. The electronic device according to any of claims 27 to 30, wherein the processing circuit is further configured to cause the network function to perform following operations:
receiving a handover requirement from the first base station, wherein a type of the handover requirement is configured as the base station-initiated type; and
transmitting the handover request message to the second base station.

33. The electronic device according to claim 32, wherein the processing circuit is further configured to cause the network function to perform following operations:
receiving an acknowledgement message for the handover request from the second base station; and
transmitting the handover command to the first base station.

34. The electronic device according to claim 29, wherein the user equipment device is of a location-fixed type, and the processing circuit is further configured to cause the network function to perform following operations:
prior to the first handover, transmitting to the first base station a message instructing the first base station to collect handover data for a set of location-fixed type user equipment devices comprising the user equipment device;
receiving from the first base station handover data of the first plurality of handovers of a user equipment device-initiated type, wherein the first plurality of handovers are performed by the first base station with user equipment devices in the set of location-fixed type user equipment devices and occur prior to the first handover; and
obtaining the handover model parameters based on the handover data of the first plurality of handovers.

35. The electronic device according to claim 29, wherein the processing circuit is further configured to cause the network function to perform following operations:
after transmitting the handover model parameters to the first base station, receive from the first base station handover data of a second plurality of handovers of a user equipment device-initiated type, wherein the second plurality of handovers occur prior to the first handover;
comparing the handover data of the second plurality of handovers with the handover model parameters; and
in response to determining that a proportion of handovers in the second plurality of handovers of which the handover data matches the handover model parameters exceeds a threshold, transmitting to the first base station a message indicating that a base station-initiated handover can begin, wherein the first base station transmits the handover request message to the second base station at least in response to receiving the message indicating that the base station-initiated handover can begin.

36. The electronic device according to claim 34 or 35, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

37. The electronic device according to claim 34, wherein, to obtain the handover model parameters, the processing circuit is further configured to cause the network function to perform following operations:
training a machine learning model using the handover data of the first plurality of handovers as training data; and
generating the handover model parameters by inputting the identifier of the user equipment device into the trained machine learning model.

38. An electronic device for a network function in a non-terrestrial network, wherein the non-terrestrial network further comprises a user equipment device capable of communicating with the network function, a base station, and a satellite, the electronic device comprising a processing circuit configured to cause the network function to perform following operations:
receiving from the base station a registration request message of the user equipment device, wherein the registration request message comprises a location type bit indicating whether the user equipment device is of a location-fixed type or a location-mobile type;
registering the user equipment device based on the registration request message; and
transmitting to the base station an acknowledgement for the registration request message, wherein, in response to the location type bit indicating that the user equipment device is of the location-fixed type, the base station transmits a registration accept message to the user equipment device, and the registration accept message comprises information indicating that a handover type for the user equipment device is configured as base station-initiated.

39. The electronic device according to claim 38, wherein when the location type bit indicates that the user equipment device is of the location-fixed type, the registration request message further comprises a field indicating geographical location information of the user equipment device, and registering the user equipment device based on the registration request message further comprises registering the geographical location information of the user equipment device.

40. An electronic device for a second base station in a non-terrestrial network, wherein the non-terrestrial network further comprises a user equipment device capable of communicating with the second base station, a first base station, a network function, and a satellite, the electronic device comprising a processing circuit configured to cause the second base station to perform following operations:
receiving from the first base station a handover request message for a first handover of the user equipment device to the second base station, wherein the handover request message indicates that a handover type of the first handover is a base station-initiated type and the first handover is determined, to be initiated at a first time, by the first base station based on a message received from the network function; and
in response to determining that resources meet requirements for the first handover, transmitting to the first base station a message indicating that the second base station has accepted the handover request.

41. The electronic device according to claim 40, wherein the processing circuit is further configured to cause the second base station to perform following operations:
receiving from the first base station a message indicating to stop the first handover; and
releasing resources prepared for the first handover.

42. The electronic device according to claim 40,
wherein, in response to receiving the message indicating that the second base station has accepted the handover request, the first base station transmits a handover command to the user equipment device, wherein the handover command instructs the user equipment device to perform the first handover and indicates that the handover type of the first handover is the base station initiated type.

43. The electronic device according to claim 40, wherein the processing circuit is further configured to cause the second base station to perform following operations:
in response to determining that resources do not meet requirements for the first handover, transmitting to the first base station a message indicating that the second base station has rejected the handover request,
wherein, in response to receiving the message indicating that the second base station has rejected the handover request, the first base station transmits to the user equipment device a message indicating that the handover type is changed to a user equipment device-initiated type.

44. The electronic device according to any of claims 40 to 42, wherein the receiving from the first base station the handover request message comprises:
receiving the handover request message directly from the first base station, or
receiving the handover request message from the network function, wherein the handover request message is transmitted to the second base station by the network function in response to receiving a handover requirement transmitted by the first base station.

45. The electronic device according to any of claims 40 to 42, wherein the transmitting to the first base station the message indicating that the second base station has accepted the handover request comprises:
transmitting an acknowledgement message for the handover request directly to the first base station, or
transmitting an acknowledgement message for the handover request to the network function, wherein the network function transmits a handover command to the first base station in response to receiving the acknowledgement message for the handover request from the second base station.

46. The electronic device according to any of claims 40 to 42, wherein the message received by the first base station from the network function comprises handover model parameters, wherein the handover model parameters comprise at least an identifier of the user equipment device, a set of handover times comprising the first time, an identifier of the first base station, and an identifier of the second base station.

47. The electronic device according to claim 46, wherein the user equipment device is a location-fixed type user equipment device, and wherein:
prior to the first handover, the first base station receives from the network function a message instructing the first base station to collect handover data for a set of location-fixed type user equipment devices comprising the user equipment device;
the first base station performs a first plurality of handovers of the user equipment device-initiated type with user equipment devices in the set of location-fixed type user equipment devices;
the first base station transmits handover data of the first plurality of handovers to the network function, wherein the first plurality of handovers occur prior to the first handover,
wherein the handover model parameters are obtained by the network function based on the handover data of the first plurality of handovers.

48. The electronic device according to claim 46, wherein:
the first base station performs a second plurality of handovers of the user equipment device-initiated type with the user equipment device, after receiving the handover model parameters from the network function;
the first base station transmits handover data of the second plurality of handovers to the network function, wherein the second plurality of handovers occur before the first handover; and
the first base station receives from the network function a message indicating that a handover of the base station-initiated type can begin, wherein the first base station determines to initiate the first handover at the first time at least in response to receiving the message indicating that the handover of the base station-initiated type can begin.

49. The electronic device according to claim 47 or 48, wherein the handover data comprises one or more of: an identifier of a user equipment device associated with a handover, a time to initiate the handover determined by a source base station associated with the handover, a signal quality between the user equipment device and the source base station and a signal quality between the user equipment device and a target base station associated with the handover reported by the user equipment device based on which the source base station determines to initiate the handover, an identifier of the source base station, an identifier of the target base station, an identifier of a satellite associated with the source base station, an identifier of a satellite associated with the target base station, and weather conditions.

50. The electronic device according to claim 47, wherein the handover model parameters are obtained by the network function through following operations:
training a machine learning model using the handover data of the first plurality of handovers as training data; and
generating the handover model parameters by inputting the identifier of the user equipment device into the trained machine learning model.

51. A method for a first base station in a non-terrestrial network, wherein the non-terrestrial network further comprises a user equipment device capable of communicating with the first base station, a second base station, a network function, and a satellite, the method comprising:
determining, based on a message received from the network function, that a first handover of the user equipment device to the second base station is to be initiated at a first time;
transmitting a handover request message to the second base station, wherein the handover request message indicates that a handover type of the first handover is a base station-initiated type; and
transmitting a handover command to the user equipment device, in response to receiving a message indicating that the second base station has accepted the handover request, wherein the handover command instructs the user equipment device to perform the first handover and indicates that the handover type of the first handover is a base station-initiated type.

52. A method for a base station in a non-terrestrial network, wherein the non-terrestrial network further comprises a user equipment device capable of communicating with the base station, a network function, and a satellite, the method comprising:
receiving a registration request message from the user equipment device, wherein the registration request message comprises a location type bit indicating whether the user equipment device is of a location-fixed type or a location-mobile type;
transmitting the registration request message to the network function; and
based on an acknowledgement for the registration request message received from the network function, transmitting a registration accept message to the user equipment device, wherein, in response to the location type bit indicating that the user equipment device is of the location-fixed type, the registration accept message comprises information indicating that a handover type for the user equipment device is configured as base station-initiated.

53. A method for a user equipment device in a non-terrestrial network, wherein the non-terrestrial network further comprises a first base station capable of communicating with the user equipment device, a second base station capable of communicating with the first base station, a network function, and a satellite, the method comprising:
receiving a handover command from the first base station, wherein the handover command instructs the user equipment device to perform a first handover to the second base station and indicates that a handover type of the first handover is a base station-initiated type;
performing signal quality measurements with the first base station and signal quality measurements with the second base station within a predetermined time period; and
performing the first handover in response to determining that, within the predetermined time period, a signal quality between the user equipment device and the first base station and a signal quality between the user equipment device and the second base station meet a predefined condition.

54. A method for a user equipment device in a non-terrestrial network, wherein the non-terrestrial network further comprises a base station capable of communicating with the user equipment device, a network function, and a satellite, the method comprising:
transmitting a registration request message to the base station, wherein the registration request message comprises a location type bit indicating whether the user equipment device is of a location-fixed type or a location-mobile type; and
receiving a registration accept message from the base station, wherein, in response to the location type bit indicating the user equipment device is of a location-fixed type, the registration accept message comprises information indicating that a handover type for the user equipment device is configured as base station-initiated.

55. A method for a network function in a non-terrestrial network, wherein the non-terrestrial network further comprises a user equipment device capable of communicating with the network function, a first base station, a second base station, and a satellite, the method comprising:
transmitting a message to the first base station, wherein the message comprises an indication to initiate, at a first time, a first handover of the user equipment device to the second base station,
wherein the first base station transmits a handover request message to the second base station, wherein the handover request message indicates that a handover type of the first handover is a base station-initiated type, and
wherein, in response to receiving a message indicating that the second base station has accepted the handover request, the first base station transmits a handover command to the user equipment device, wherein the handover command instructs the user equipment device to perform the first handover and indicates that the handover type of the first handover is a base station-initiated type.

56. A method for a network function in a non-terrestrial network, wherein the non-terrestrial network further comprises a user equipment device capable of communicating with the network function, a base station, and a satellite, the method comprising:
receiving from the base station a registration request message of the user equipment device, wherein the registration request message comprises a location type bit indicating whether the user equipment device is of a location-fixed type or a location-mobile type;
registering the user equipment device based on the registration request message; and
transmitting to the base station an acknowledgement for the registration request message, wherein, in response to the location type bit indicating that the user equipment device is of the location-fixed type, the base station transmits a registration accept message to the user equipment device, and the registration accept message comprises information indicating that a handover type for the user equipment device is configured as base station-initiated.

57. A method for a second base station in a non-terrestrial network, wherein the non-terrestrial network further comprises a user equipment device capable of communicating with the second base station, a first base station, a network function, and a satellite, the method comprising:
receiving from the first base station a handover request message for a first handover of the user equipment device to the second base station, wherein the handover request message indicates that a handover type of the first handover is a base station-initiated type and the first handover is determined, to be initiated at a first time, by the first base station based on a message received from the network function; and
in response to determining that resources meet requirements for the first handover, transmitting to the first base station a message indicating that the second base station has accepted the handover request.

58. A computer-readable storage medium having stored thereon one or more instructions which, when executed by one or more processors of an electronic device, cause the electronic device to perform the method according to any of claims 51 to 57.

59. A computer program product comprising program instructions which, when executed by one or more processors of a computer, cause the computer to perform the method according to any of claims 51 to 57.
